(19) Europäisches Patentamt
European Patent Office
Office européen des brevets

(11) EP 1 333 053 B1

(12) **EUROPÄISCHE PATENTSCHRIFT**

(45) Veröffentlichungstag und Bekanntmachung des Hinweises auf die Patenterteilung:
**04.07.2007 Patentblatt 2007/27**

(51) Int Cl.:
***C08L 83/04*** *(2006.01)* ***C08K 3/34*** *(2006.01)*

(21) Anmeldenummer: **02028949.2**

(22) Anmeldetag: **24.12.2002**

(54) **Raumtemperaturvernetzende Einkomponenten-Silikonkautschukformulierungen mit hydrophoben Kieselsäuren**

Silicone rubber monocomponent compositions curable at ambient temperature and containing hydrophobic silicic acid

Compositions de caoutchouc de silicone durcissables à température ambiante, dans un emballage et contenant de l'acide silicique hydrophobe

(84) Benannte Vertragsstaaten:
**AT BE BG CH CY CZ DE DK EE ES FI FR GB GR IE IT LI LU MC NL PT SE SI SK TR**

(30) Priorität: **30.01.2002 DE 10203500**

(43) Veröffentlichungstag der Anmeldung:
**06.08.2003 Patentblatt 2003/32**

(73) Patentinhaber: **Degussa GmbH
40474 Düsseldorf (DE)**

(72) Erfinder:
- **Kempf, Michael
63517 Rodenbach (DE)**
- **Scholz, Mario, Dr.
63584 Gründau (DE)**
- **Kawamoto, Kenichi
63456 Hanau (DE)**
- **Panz, Christian, Dr.
50389 Wesseling (DE)**

(56) Entgegenhaltungen:
**EP-A- 1 281 733**
**EP-A- 1 281 735**
**EP-A- 1 295 906**
**DE-A- 2 628 975**
**DE-A- 2 729 244**

EP 1 333 053 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft raumtemperaturvernetzende und feuchtigkeitsvernetzende Einkomponenten-Silikonkautschukformulierungen (RTV-1K) mit hydrophoben Kieselsäuren, die eine außergewöhnlich niedrige Wasseraufnahme, einen hohen Weißgrad und exakt einstellbare sowie lagerstabile rheologische Eigenschaften bei hoher Verstärkungswirkung in den Silikonkautschuk-Vulkanisaten aufweisen.

Die Verwendung von Kieselsäuren, insbesondere von hydrophobierten Fällungskieselsäuren in Silikonkautschukformulierungen ist bekannt und z. B. in DE 27 29 244 und DE 26 28 975, beschreiben.

In DE 26 28 975 und DE 27 29 244 wird die Herstellung von hydrophoben Kieselsäuren beschrieben, in dem eine hydrophile Fällungskieselsäure mit geringer Wasseraufnahmefähigkeit mit Silikonöl bzw. Dimethyldichlorsilan umgesetzt wird. Im Verfahren gemäß DE 26 28 975 erfolgt die Umsetzung, indem das Hydrophobierungsmittel (Silikonöl) der trockenen Fällungskieselsäure zugesetzt wird, im Verfahren nach DE 27 29 244 wird das Hydrophobierungsmittel (Dimethyldichlorsilan) direkt in die Fällungskieselsäuresuspension gegeben. In beiden Fällen schließt sich dem Hydrophobierungsschritt eine Temperung bei erhöhten Temperaturen, das heißt zwischen 200 und 400 °C, an.

Nachteilig bei diesem Verfahren ist, dass sich die auf diese Weise hydrophobierte Fällungskieselsäure bei den erforderlichen Prozeß-Temperaturen verfärbt. Die Verfärbung der Kieselsäure macht sich besonders störend bei der Zugabe zu Silikonformulierungen bemerkbar, d. h. bei der Zugabe dieser hydrophoben Fällungskieselsäuren zu Silikonkautschukformulierungen oder in silikonölbasierenden Entschäumermischungen.

Als Maß für die Verfärbung kann der sogenannte Remissionswert dienen. Bei der Remissionsmessung wird das diffuse Reflexionsvermögen einer Probe untersucht. Je höher das diffuse Reflexionsvermögen einer Probe, desto höher ist ihr Remissionswert und damit der Weißgrad der Probe.

Fällungskieselsäuren haben in der Regel einen Remissionswert von maximal 97 %. Eine Aufgabe der vorliegenden Erfindung ist es daher, eine RTV-1K-Silikonkautschukformulierung, enthaltend hydrophobe Kieselsäuren, herzustellen, die einen hohen Remissionswert aufweist.

Verfärbungen treten bei der Hydrophobierung von Kieselsäuren insbesondere dann auf, wenn die Kieselsäuren stark hydrophobiert werden, das heißt eine hohe Methanolbenetzbarkeit und hohe Kohlenstoffbeladungen aufweisen. Gerade diese Eigenschaften sind aber in RTV-1K-Silikonkautschukformulierungen erwünscht.

RTV-1K-Silikonkautschukformulierungen benötigen zur vollen Ausbildung ihrer mechanischen Eigenschaften aktive Verstärkerfüllstoffe. Dabei werden zur Zeit ausschließlich hochdisperse pyrogene Kieselsäuren verwendet. Ein Verstärkerfüllstoff muß gute mechanische Eigenschaften im Vulkanisat bewirken und die eingestellten rheologischen Eigenschaften müssen auch nach längeren Lagerzeiten noch stabil bleiben.

RTV-1K-Silikonkautschukformulierungen werden bei Raumtemperatur verarbeitet. Bei luftfeuchtigkeitshärtenden Silikonkautschukformulierungen führt ein zu hoher Wassergehalt des Füllstoffes zu einer unerwünschten Aushärtung während der Lagerung und einer minderwertigen Oberfläche des Vulkanisats. Deshalb stellt die Wasseraufnahmecharakteristik, d. h. die adsorbierten Wassermengen bei unterschiedlichen relativen Luftfeuchten, ein Maß für die Prozeßfähigkeit des Füllstoffes dar.

Ein Nachteil der bekannten Hydrophobierungsverfahren von Kieselsäuren ist, dass hier nur eine begrenzte Menge an Hydrophobierungsmittel kovalent auf der Kieselsäure angebunden werden kann. Gerade in RTV-1K-Silikonkautschukformulierungen sind jedoch hohe Kohlenstoffbeladungen erwünscht, da sich hierdurch die Verarbeitbarkeit bzw. die Dispergierung der Kieselsäure sowie die rheologischen Eigenschaften wie die Verdickung, d. h. die gewünschte Fließgrenze und Viskosität, der Compounds einstellen und entscheidend verbessern lassen.

Als Maß der Verdickung kann die sogenannte DBP-Zahl dienen. Die DBP-Zahl gibt die Aufnahmekapazität einer Kieselsäure an DBP an. Das Meßverfahren zeigt, bei wieviel g an Dibuthylphthalat auf 100 g Probe ein sprunghafter Kraftanstieg im Kneter zu beobachten ist.

Die Verdickungswirkung der bekannten hydrophoben Fällungskieselsäuren ist vermutlich auf deren niedrige Kohlenstoffgehalte von unter 3,1 % und/oder auf eine inhomogene Hydrophobierung zurückzuführen. Dies vermindert den maximal möglichen Anteil an Kieselsäure als Füllstoff in Silikonkautschukformulierungen. In DE 26 28 975 werden Daten zur Prüfung von hydrophoben Fällungskieselsäuren in Silikonkautschukformulierungen aufgeführt, in denen die hydrophobe Fällungskieselsäure in steigenden Gewichtsanteilen in Silikonkautschukformulierungen eingesetzt wird. In allen Tabellen kann man erkennen, dass sich die mechanischen Eigenschaften der Silikonkautschukvulkanisate mit zunehmenden Füllstoffgehalt verbessern.

Es wäre wünschenswert, RTV-1K-Silikonkautschukformulierungen herzustellen, die zur Verbesserung der mechanischen Eigenschaften hohe Anteile an hydrophoben Kieselsäuren aufweisen, aber gleichzeitig noch fließfähig sind sowie eine gute Lagerstabilität aufweisen.

Aufgabe der vorliegenden Erfindung war es daher, eine RTV-1K-Silikonkautschukformulierung bereitzustellen, die einen hohen Anteil an Füllstoffen wie hydrophoben Kieselsäuren, einen hohen Weißgrad und einstellbare mechanische und rheologische Eigenschaften bei vorhandener Lagerstabilität aufweist.

Es wurde gefunden, dass dies durch Einsatz einer hydrophoben Kieselsäure, die einen niedrigen Wassergehalt

und eine niedrige Feuchtigkeitsaufnahme aufweist, erreicht werden kann.

Gegenstand der vorliegenden Erfindung sind daher raumtemperaturvernetzende Einkomponenten-Silikonkautschukformulierungen (RTV-1K), enthaltend 0,5 bis 60 Gew.-% hydrophobe Kieselsäuren mit den folgenden Eigenschaften:

- Kohlenstoffgehalt > 3.1 %
- Methanolbenetzbarkeit > 60 %
- Remissionswert > 94 %
- Verhältnis von BET/CTAB > 1 und < 3
- DBP-Aufnahme < 230 g/100 g
- BET-Oberfläche 50 -110 $m^2/g$
- CTAB-Oberfäche > 30 $m^2/g$
- Wasserdampfaufnahme bei 30 °C und 30 RF < 1.3
- Wasserdampfaufnahme bei 30 °C und 70 RF < 1.7

und 40 - 99,5 Gew.-% eines Organopolysiloxans der Formel

$$Z_n\ Si\ R_{3-n}\ \text{-O-}[Si\ R_2\ O]_x\ \text{-}Si\ R_{3-n}\text{-}Z'_n$$

mit

R = Alkyl-, Acetoxy-, Oxim-, Alkoxy-, Amido-, Aryl-, Alkenylreste, mit 1 bis 50 Kohlenstoffatomen, unsubstituiert oder mit O, S, F, Cl, Br, I substituiert, jeweils gleich oder verschieden und/oder Polystyrol-, Polyvinylacetat-, Polyacrylat-, Polymethacrylat- und Polyacrylnitrilreste mit 50 - 10.000 Repetiereinheiten.

Z = OH, Cl, Br, Acetoxy-, Amino-, Amido-, Aminoxy-, Oxim-, Alkoxy-, Alkenyloxy-, Acryloxy- oder Phosphatresten, wobei die organischen Reste bis zu 20 Kohlenstoffatome tragen können, jeweils gleich oder verschieden.

Z' = Oxim-, Alkoxy-, Amido-, Acetoxyreste

n = 1 - 3

x = 100 - 15.000, bevorzugt 100 - 11.000, besonders bevorzugt 100 - 8.000.

Die verwendeten hydrophoben Kieselsäuren können pyrogene Kieselsäuren oder Fällungskieselsäuren sein. Wichtig ist, dass die verwendeten Kieselsäuren die folgenden physikalisch-chemischen Daten aufweisen:

- Kohlenstoffgehalt ≥ 3.1 %, bevorzugt ≥ 5,0 %, besonders bevorzugt 3,1-10 %, bzw. 4 bis 7 %
- Methanolbenetzbarkeit ≥ 60 %, bevorzugt über 65 %, besonders bevorzugt über 70 bzw. 75 %
- Remissionswert ≥ 94 %, bevorzugt > 95, besonders bevorzugt über 96
- Verhältnis von BET/CTAB > 1 und < 3
- DBP-Aufnahme 50 - 230 g/100 g
- BET-Oberfläche 50 -110 $m^2/g$
- CTAB-Oberfäche 30 bis 110 $m^2/g$

Die genannten Vorzugsbereiche können unabhängig voneinander eingestellt werden.

Die verwendeten hydrophoben Kieselsäuren können weiterhin jeweils unabhängig voneinander durch die folgenden Eigenschaften gekennzeichnet sein

- modifzierte Searszahl < 1,6
- pH-Wert 5,0 - 9,0, bevorzugt 7,0-8,5
- Wassergehalt < 2 %, bevorzugt < 1,5 %
- Leitfähigkeit < 500 µS, bevorzugt 150 µS
- Glühverlust >3 %

Die Leitfähigkeit kann unter 100, 60, 30 oder sogar unter 20 µS liegen.

Kieselsäuren mit einem pH ≤ 7,0 können z. B. durch Ansäuern des nach der Fällung durch Filtration erhaltenen Filterkuchens mit Schwefelsäure erhalten werden.

Bevorzugt wird eine hydrophobe Fällungskieselsäure eingesetzt, die durch die folgende Schritte hergestellt wird:

a) Herstellen einer Mischung aus einem Organopolysiloxanderviat und einer Fällungskieselsäure,

b) Konditionierung bei 10 bis 150 °C für eine Zeit von 0,5 bis 72 h

c) oxidative Temperung bei über 300 °C mit einem oxidierenden Gas.

Die gute Verteilung des Hydrophobierungsmittels und der hohe Grad der Hydrophobierung einer so hergestellten hydrophoben Fällungskieselsäure bewirken in RTV-1K-Silikonkautschukformulierungen eine gezielt einstellbare Verdickung - die sich auch durch längere Lagerung nicht verschlechtert - bei gleichzeitig guten mechanischen und optischen Eigenschaften der Vulkanisate.

Die hydrophobe Kieselsäure wird vorzugsweise mit einem Organopolysiloxanderivat wie Polydimethylsiloxan hergestellt, so dass sie nach der Temperung als organische Reste ausschließlich Methylgruppen enthält, was mit einer sehr hohen thermischen Belastbarkeit (> 300 °C unter Luftzutritt führen nicht zu Verfärbungen) einhergeht.
Zur Herstellung dieser hydrophoben Kieselsäuren werden bevorzugt Kieselsäuren mit niedriger Silanolgruppendichte verwendet. Als Maß der Silanolgruppenmenge dient die modifizierte Searszahl, d. h. der Alkaliverbrauch einer Säure-Base-Titration. Ein Maß für die Silanolgruppendichte dient die im folgenden definierte, modifizierte Searszahl in Verbindung mit der BET-Oberfläche.

Die bei der Temperung der Kieselsäure angewendeten Reaktionsbedingungen führen nicht zu einer Verkohlung und damit kaum zu einer Verfärbung. Es ist daher wichtig, dass die hydrophile Basiskieselsäure keine organischen Verunreinigungen aufweist, da sonst während der Temperung eine Verfärbung auftreten kann. Da die durch die Temperung entstehenden, unter Prozeßbedingungen gasförmigen Spaltprodukte auch in oxidierender Atmosphäre eine gewisse Verfärbung bewirken können, ist es wichtig, dass diese Spaltprodukte durch einen ausreichenden Gasdurchsatz von dem Produkt entfernt werden.

Die Verwendung von flüssigen Polysiloxan, bevorzugt Polydimethylsiloxan von vorzugsweise 30 - 100 mPas erlaubt eine optimale Verteilung auf der Basiskieselsäure. Unter den oxidativen Reaktionsbedingungen können die verwendeten Polydimethylsiloxane verharzen. Dies hat den großen Vorteil, dass sich das Hydrophobierungsmittel in flüssiger Form auf der Kieselsäure verteilen und dann fixieren läßt. Durch das oxidierende Tempern läßt sich die Menge an gebundenem Kohlenstoff stark erhöhen.

Die vorzugsweise eingesetzten Kieselsäuren zeigen eine steile Methanolbenetzbarkeitskurve, d.h. es hat eine homogene Hydrophobierung stattgefunden (Fig. 1). Fig. 2 zeigt eine Methanolbenetzbarkeit von üblichen hydrophoben Kieselsäuren.

Hohe Kohlenstoffbeladungen und hohe Methanolbenetzbarkeiten verbessern die Eigenschaften von Kieselsäuren in den erfindungsgemäßen Silikonkautschukformulierungen entscheidend. Die weitere Verminderung der Feuchteaufnahmefähigkeit ermöglicht den Einsatz in RTV-1K-Silikonkautschukformulierungen, so dass eine ausreichende Lagerfähigkeit der erfindungsgemäßen Formulierungen erhalten wird. Die stark kohlenstoffhaltigen hydrophoben Kieselsäuren zeigen in den erfindungsgemäßen Silikonkautschukformulierungen wesentlich verbesserte rheologische Eigenschaften, d. h. sie wirken in Abhängigkeit vom Kieselsäure-Füllgrad nur gering verdickend. Diese geringe Verdikkungswirkung ermöglicht es, fließfähige Silikonkautschukformulierungen herzustellen. Die rheologischen Eigenschaften der erfindungsgemäßen RTV-1K-Formulierungen können bei Verwendung einer hydrophoben Kieselsäure, die aus Fällungskieselsäuren hergestellt worden ist, durch Zugabe einer pyrogenen Kieselsäure verbessert werden. Hier werden bevorzugt 0,01 - 12, besonders bevorzugt 0,05 - 4 Gew.-% einer pyrogenen Kieselsäure eingesetzt.
Als pyrogene Kieselsäure können hydrophile (z. B. Aerosil 300, Degussa AG) oder hydrophobe (z. B. Aerosil R 812 S, Degussa AG) Kieselsäuren eingesetzt werden.
Zusätzlich führen höhere Füllgrade zu deutlich verbesserten mechanischen Eigenschaften der Vulkanisate.

Die Herstellung der hydrophoben Fällungskieselsäuren kann in 3 Schritten erfolgen:

- Zunächst erfolgt die physikalische Vorverteilung eines flüssigen Polysiloxanderivates auf der Kieselsäureoberfläche (Verfahrensschritt a)). Wird die Vorverteilung in wässrigen Medien, d. h. Suspensionen oder Kieselsäure mit einem Wassergehalt über 70 % durchgeführt, dann ist diese typischerweise nicht beständig. Es muss daher nach der Vorverteilung schnell abfiltriert und/oder eine Kurzzeittrocknung (z. B. Spin-Flash, Düsenturm-Trockner) durchgeführt werden. Dies führt zu einer Konservierung der Verteilung der Organopolysiloxantröpfchen auf der Kieselsäure und verhindert die Entmischung in Wasser, Silikonöl und Kieselsäure.

- Anschließend wird durch einen gezielten Konditionierungschritt Verfahrensschritt b) die Verteilung des Hydrophobierungsmittels weiter verbessert und ein Aufziehen des Polysiloxanderivates auf der Kieselsäureoberfläche erzielt. Die Verteilung ist auch in wässrigen Medien stabil. Das Polysiloxanderviat trennt sich nach dem Verfahrensschritt

b) nicht mehr von der Kieselsäure ab. Die so konditionierten Kieselsäuren lassen sich bei Kohlenstoffgehalten ≥ 3,1 stufenlos auf eine Methanolbenetzbarkeit bis zu 55 % einstellen. Das BET/CTAB-Verhältnis ist nach diesen Verfahrensschritt < 1. Die Anbindung des Polysiloxans an die Kieselsäure erfolgt vermutlich durch die Ausbildung multibler Wasserstoffbrückenbindungen zwischen den Siloxanbrücken der Polysiloxanmoleküle und den Silanolgruppen der Kieselsäureoberfläche.

- Anschließend erfolgt eine Temperung in oxidierender Atmosphäre (Verfahrensschritt c)), welche Verfärbungserscheinungen unterdrückt, für eine kovalente Anbindung des Hydrophobierungsagens sorgt und - vermutlich durch das Entstehen gasförmiger Spaltprodukte - die Verteilung des Hydrophobierungsmittels noch weiter steigert. Getemperte Kieselsäuren haben bei niedrigerem Kohlenstoffgehalt als die entsprechende, konditionierte Kieselsäure eine höhere Methanolbenetzbarkeit. Die Temperung in oxidierender Atmosphäre unterstützt die Verharzung der Polysiloxane, so dass sich deutlich größere Mengen an Hydrophobierungsmittel kovalent auf der Kieselsäure verankern lassen. Das BET/CTAB-Verhältnis hat sich umgekehrt und ist jetzt > 1.

Als Organopolysiloxanderivat können alle Organosilane oder Organohalogensilane eingesetzt werden, die üblicherweise zur Hydrophobierung von Fällungskieselsäuren verwendet werden.

Verfahrensschritt a) des Verfahrens zur Herstellung der hydrophoben Kieselsäure kann mit den folgenden Varianten durchgerührt werden:

- Zugabe von Organopolysiloxanderivat auf eine Fällungskieselsäure mit einem Wassergehalt von 1 bis 80 Gew.-%, bevorzugt 20 bis 60 Gew.-%.
- Zugabe des Organopolysiloxanderivats in eine Dispersion der Fällungskieselsäure, d. h. nach erfolgter Fällung von Silikat mit einer Säure z. B. mit einem Rhein-Hütte-Mischer oder Kothof-Mischsirene oder Ultra-Turrax. Dies erfordert eine rasche Filtration bzw. eine Kurzzeit-Trocknung nach der Umsetzung.
- Zugabe des Organopolysiloxanderivats auf eine Fällungskieselsäure mit einem Wassergehalt von 70 bis 99 Gew.-% bei anschließender Trennung des Feststoffs vom Wasser. Die Trennung kann durch Filtration, Düsenturm-, Spin-Flash- oder eine sonstige Kurzzeit-Trocknung erfolgen. Je höher der Wassergehalt, desto rascher sollte die Trennung durchgeführt werden. Eine Entmischung ist zu vermeiden.
- Gleichzeitiges Zuführen der Fällungskiesel- bzw. wasserhaltigen Kieselsäure (z. B in Form von Filterkuchen, Dispersion oder Suspension) und des Organopolysiloxanderivats in einen Spin-flash-Trockner.
- Mischen von trockener Fällungskieselsäure mit Polysiloxan, z. B. in einem Gericke-Mischer.

Alternativ kann zunächst ein Masterbatch, d.h. eine konditionierte Fällungskieselsäure, erhalten nach den Verfahrensschritten a) und b) hergestellt und mit einer (hydrophilen) bzw. wasserhaltigen Fällungskieselsäure (z. B. Filterkuchen, Kieselsäuresuspensionen oder Dispersionen) gemischt werden.

Der Wassergehalt der hydrophilen Fällungskieselsäure kann in den bereits genannten Bereichen schwanken.

Die Basis-Kieselsäure kann z. B. im Massenverhältnis 1:1 bis 1:3 mit Silikonöl z. B. DOW CORNING (R) 200 FLUID 50 CS (Dimethylpolysiloxan 50 mPas, mit Trimethysilyl-Gruppen terminiert, Kohlenstoffgehalt ca. 33 %) belegt werden (Schritt a)). Das so entstandene Pulver wird z. B. über eine halbe Stunde bei einer Temperatur von über 100 °C konditioniert. Die Konditionierung (Schritt b) wird hier so lange durchgeführt, bis ein Material entstanden ist, das zwar wasserbentzbar (Methanolbenetzbarkeit < 20, zur Definition der Methanolbenetzbarkeit siehe Meßverfahren) ist, bei dem sich jedoch Kieselsäure und Silikonöl beim Eintrag in Wasser nicht mehr voneinander trennen (wenn sich nach Schritt b) unmittelbar Schritt c) anschließt, dann wird eine Methanolbenetzbarkeit > 20 bevorzugt). Durch Mischen dieses Masterbatches (z. B. 50 Gew.-% Kieselsäure und 50 Gew.-% Silikonöl) mit wässrigen Kieselsäuredispersionen oder Kieselsäuresuspensionen entstehen stabile Mischungen, bei denen sich das Silikonöl nicht mehr von der Kieselsäure abtrennt. Die Gesamtmischung enthält typischerweise 1 Gewichtsteil Silikonöl, ca. 4-8 Gewichtsteile Kieselsäure und 20-60 Gewichtsteile Wasser. Zur Herstellung einer solchen Suspension kann z. B. der Masterbatch (z. B. 50 % Kieselsäure und 50 % Silikonöl) mit ca. der 10-16-fachen Menge an Filterkuchen (Feststoffgehalt ca. 20 %) und ca. der 10-20-fachen Menge an zusätzlichem Wasser intensiv gemischt werden. Der Vorteil dieser Vorgehensweise besteht darin, dass sich der wasserbenetzbare Masterbatch (der bis zu 75 % an hydrophoben Organopolysiloxan enthält!) direkt in Kieselsäurefällsuspensionen oder Kieselsäurespeisen sehr fein und stabil verteilen läßt, ohne daß der Einsatz von Emulgatoren oder Tensiden erforderlich ist. Nach Trocknung oder Filtration und anschließender Trocknung einer solchen Mischung kann die so erhaltene organopolysiloxanhaltige Kieselsäure erneut konditioniert werden (Schritt b).

Diese Schritte können einzeln, ggf. mit einer vorhergehenden Vermahlung durchgeführt werden. Die Vermahlung sollte jedoch nicht vor der Belegung a) durchgeführt werden. Es ist auch möglich, mehrere, - d. h. gleiche oder unterschiedliche - dieser Varianten nacheinander durchzuführen. Es sind folgende Ausrührungsformen des Verfahrens denkbar:

- Einer der Verfahrensschritte a), b) und c) wird mehrmals (2 bis 5 mal) hintereinander ausgeführt.
- Die Verfahrensschritte a) und b) werden mehrmals (2 bis 5 mal) hintereinander durchgeführt.
- Alle Verfahrensschritte a) b) und c) werden mehrmals (2 bis 5 mal) hintereinander durchgerührt, d. h. der Prozess wird mehrmals durchlaufen.

Verfahrensschritt b) wird bevorzugt durch eine Wärmebehandlung von 100 - 150 °C innerhalb von 0,5 bis 2 Stunden durchgerührt. Nach der Konditionierung kann eine teilhydrophobierte Kieselsäure mit einer Methanolbenetzbarkeit von 20 % und mehr vorliegen. Grundsätzlich kann zwischen Naß- und Trockenhydrophobierung unterschieden werden.

Naßhydrophobierung bedeutet, dass es sich bei den silikatischen Edukten um wässrige Kieselsäuresuspensionen, Kieselsäurespeisen oder stark wasserhaltige Kieselsäurefilterkuchen handelt, die mit den entsprechenden Hydrophobierungsmitteln belegt werden, wie z. B. in DE 27 29 244 für Fällungssuspensionen mit Organohalogensilanen beschrieben.

Trockenhydrophobierung bedeutet, dass es sich bei den silikatischen Edukten um Kieselsäurepulver mit verschiedenen Feuchtigkeitsgehalten von 1 bis 75 % handelt, die mit den entsprechenden Hydrophobierungsmitteln belegt werden. Dieses Verfahren wird z. B. in DE 26 28 975 beschrieben.

Für die Herstellung der erfindungsgemäßen Kieselsäure werden Organopolysiloxanderivate eingesetzt; es können jedoch auch andere Siliziumverbindungen verwendet werden, die unter den gewählten Reaktionsbedingungen zu Organopolysiloxanen reagieren (z. B. Dichlordimethylsilan in wässriger Umgebung).

Als Hydrophobierungsreagenzien dienen Organopolysiloxanderivate oder deren Vorstufen, z. B. der Zusammensetzung $R_{4-n}SiX_n$ (mit n = 1, 2, 3), $[SiR_xX_yO]_z$ (mit $0 \leq x \leq 2$, $0 \leq y \leq 2$, $3 \leq z \leq 10$ mit x + y = 2), $[SiR_xX_yN]_z$ (mit $0 \leq x \leq 2$, $0 \leq y \leq 2$, $3 \leq z \leq 10$ mit x + y = 2), $SiR_nX_mOSiR_oX_p$ (mit $0 \leq n \leq 3$, $0 \leq m \leq 3$, $0 \leq o \leq 3$, $0 \leq p \leq 3$, mit n + m = 3, o + p = 3 ), $SiR_nX_mNSiR_oX_p$ (mit $0 \leq n \leq 3$, $0 \leq m \leq 3$, $0 \leq o \leq 3$, $0 \leq p \leq 3$, mit n + m = 3, o + p = 3 ), $SiR_nX_m[SiR_xX_yO]_zSiR_oX_p$ (mit $0 \leq n \leq 3$, $0 \leq m \leq 3$, $0 \leq x \leq 2$, $0 \leq y \leq 2$, $0 \leq o \leq 3$, $0 \leq p \leq 3$, $1 \leq z \leq 10000$ mit n + m = 3, x + y = 2, o + p = 3 ). Bei diesen Verbindungen kann es sich um lineare, cyclische und verzweigte Silan- , Silazan und Siloxanverbindungen handeln. Bei R kann es sich um Alkyl und/oder Arylreste handeln, welche mit funktionellen Gruppen wie der Hydroxygruppe, der Aminogruppe, Polyethern wie Ethylenoxid und/oder Propylenoxid und Halogenidgruppen wie Fluorid, Chlorid, Bromid oder Jodid substituiert sein können. R kann auch Gruppen wie Hydroxy-, Amino-, Halogenid-, Alkoxy- Alkenyl-, Alkinyl- und Aryl-Gruppen und schwefelhaltige Gruppen enthalten. Bei X kann es sich um reaktive Gruppen wie Silanol-, Amino-, Mercapto, Halogenid-, Alkoxy- Alkenyl-und Hydridgruppen handeln.

Bevorzugt werden lineare Polysiloxane der Zusammensetzung $SiR_nX_m[SiR_xX_yO]_zSiR_oX_p$ (mit $0 \leq n \leq 3$, $0 \leq m \leq 3$, $0 \leq x \leq 2$, $0 \leq y \leq 2$, $0 \leq o \leq 3$, $0 \leq p \leq 3$, $1 \leq z \leq 10000$ mit n + m = 3, x + y = 2, o + p = 3 ) verwendet, bei welchen R bevorzugt durch Methyl repräsentiert wird.

Besonders bevorzugt werden Polysiloxane der Zusammensetzung $SiR_nX_m[SiR_xX_yO]_zSiR_oX_p$ (mit $0 \leq n \leq 3$, $0 \leq m \leq 1$, $0 \leq x \leq 2$, $0 \leq y \leq 0{,}2$, $0 \leq o \leq 3$, $0 \leq p \leq 1$, $1 \leq z \leq 1000$ mit n + m = 3, x + y = 2, o + p = 3 ) verwendet, bei welchen R bevorzugt durch Methyl repräsentiert wird.

Im oben beschriebenen Verfahren lassen sich aber auch schwerflüchtige Polysiloxane einsetzten, die keine funktionellen Gruppen aufweisen.

Durch das Vorhandensein bestimmter funktioneller Gruppen im eingesetzten Polysiloxan können Salze oder niedermolekulare Stoffe wie $NH_3$, Amine Alkohole etc. entstehen, welche zu störenden Verunreinigungen führen können. Eine wichtige Ausnahme stellen hier silanolfunktionalisierte Polysiloxane dar, da hier als Verunreinigung lediglich Wasser entsteht, das unter den gewählten Prozeßbedingungen leicht entfernbar ist.

Bevorzugt kann es sich bei dem Hydrophobierungsmittel um ein methylterminiertes Polydimethylsiloxan, insbesondere eines mit einer Viskosität von 30 - 100 mPas, bevorzugt 40 - 60 mPas handeln. Ein geeignetes Polysiloxanöl ist z. B. DOW CORNING (R) 200 FLUID 50 CS.

Da es sich bei den genannten Hydrophobierungsmitteln um schwerflüchtige Verbindungen handelt, spielen für die Vorverteilung der Hydrophobierungsmittel auf der Kieselsäureoberfläche Kapillarkräfte und Diffusionsvorgänge an der Flüssig/Fest-Phasengrenze eine wichtige Rolle.

Selbst wenn die bevorzugt eingesetzten Hydrophobierungsmittel im Verlauf einer thermischen Behandlung eine gewisse Flüchtigkeit aufweisen, ist die Flüssig/Fest-Verteilung trotzdem von Bedeutung. Aus diesem Grund wird hier zwischen physikalischer Vorverteilung, Konditionierung und Temperung unterschieden.

Die Temperung, d. h. Verfahrensschritt c) wird bei mindestens 300 °C, bevorzugt über 350 °C, ganz besonders bevorzugt bei 360 - 370 °C mit einem oxidierenden Gas durchgeführt. Dies kann Luft, $Cl_2$, $NO_x$ ($NO_2$, $N_2O_5$, NO, $N_2O$), $O_3$, $O_2$, $Br_2$, $F_2$ oder ein Gemisch dieser Gase mit weiteren inerten Gasen wie $CO_2$, $N_2$ oder Brennerabgase jeweils bevorzugt nicht weniger als 1 Vol-%, sein.

Das oxidierende Gas kann optional weiterhin bis zu 80, bevorzugt bis zu 50 Vol-%, besonders bevorzugt 20 - 40 Vol-% Wasser enthalten.

Es ist in jedem Fall für einen guten Durchsatz an Gas zu sorgen; das Gas muss nach Möglichkeit jedes

Kieselsäureteilchen erreichen. Geeignet hierzu sind z. B. Metallgitteröfen, Wirbelkammern oder Bandreaktoren. Die oxidative Temperung im Verfahrensschritt c) kann auch unter fluiden Bedingungen durchgerührt werden. Diese Bedingungen können in einem Schwebebett, Fließbett, Wirbelbett, Fluidatbett und/oder Sprudelbett eingestellt werden.

Optional wird die hydrophobierte Kieselsäure nach dem Konditionierschritt bzw. Tempern vermahlen. Eine Vermahlung, aber vor dem Belegungsschritt a) ist nicht angezeigt und führt zu minderwertigen Produkten mit inhomogener Hydrophobierung.

Nach dem optionalen Vermahlen wird eine Kieselsäure mit einem $d_{4.3}$ von 8 - 25 μm, bevorzugt 8 - 15 μm erhalten.

Für die erfindungsgemäßen RTV-1K-Silikonkautschukmischungen ist es wichtig, dass keine organischen Bestandteile auf der Kieselsäure sind, die sich unter Sauerstoffeinfluß verfärben können. Nun sind siliciumorganische Verbindungen, die ausschließlich Methyl, Phenyl, Fluorkohlenstoff oder Fluorkohlenwasserstoffe als organische Reste enthalten, auch in Anwesenweit von atmosphärischem Sauerstoff, ausgesprochen temperaturstabil. Um jedoch die stabilen Siloxanbrücken von Siloxanverbindungen effektiv zu spalten und kovalent mit der Kieselsäure zu verbinden, benötigt man Temperaturen über 300 °C. Bei diesen hohen Temperaturen führen Siloxanverbindungen, besonders bei Fällungskieselsäuren niedriger Silanolgruppendichte, üblicherweise zu Verfärbungserscheinungen auf der Kieselsäure. Das beschriebene Verfahren zur Herstellung der in den erfindungsgemäßen Silikonkautschukformulierungen benötigten hydrophoben Kieselsäuren ermöglicht es, diese Verfärbungen zu unterdrücken. Diese Verfärbungserscheinungen werden durch Remissionsmessungen mit einem optischen Meßverfahren, das auf diffuser Reflexion beruht, gemessen. Liegen die Remissionswerte von Kieselsäure > 94%, erscheint der mit Kieselsäure gefüllte Silikonkautschuk-Compound rein weiß. Da die Brechungsindices von Kieselsäure und Silikonkautschuk nahe beieinander liegen, werden selbst kleinste Verunreinigungen und Verfärbungen der Füllstoffkieselsäure im Silikonkautschuk deutlich sichtbar. Eine Remission von 93 % führt bereits zu einer deutlichen, mit dem unbewaffneten Auge sichtbaren Verfärbung im Silikonkautschuk, obwohl das nicht eingearbeitete Kieselsäurepulver dem Betrachter rein weiß erscheint.

Die erfindungsgemäßen Formulierungen können als RTV-1K-Silikondichtmassen, insbesondere als selbstnivellierende Dichtmassen, als Fugenmassen, Fensterdichtmassen, Dichtungen in Kraftfahrzeugen, hitzebeständigen Dichtungen, ölausschwitzenden Dichtungen, chemikalienbeständigen Dichtungen und wasserdampfbeständigen Dichtungen verwendet werden.

Als Organopolysiloxane können alle Polysiloxane verwendet werden, die bisher als Grundlage für zu Organopolysiloxanelastomere bei Raumtemperatur vernetzenden (RTV) Massen verwendet wurden bzw. verwendet werden konnten. Sie können z.B. durch die allgemeine Formel

$$Z_n\ Si\ R_{3-n}\ \text{-O-}[Si\ R_2\ O]_x\ \text{-}Si\ R_{3-n}\ \text{-}Z'_n$$

beschrieben werden, wobei x, R, Z' und Z die bereits genannten Bedeutungen besitzen.

Innerhalb bzw. entlang der Siloxankette in der oben angegebenen Formel können auch andere meist nur als Verunreinigungen vorliegende Siloxaneinheiten als Diorganosiloxaneinheiten, z.B. solche der Formeln $RSiO_{3/2}$ $RSiO_{1/2}$ und $SiO_{4/2}$ wobei R jeweils die oben dafür angegebene Bedeutung hat, vorhanden sein. Die Menge dieser anderen Siloxaneinheiten sollte 10 Molprozent nicht übersteigen.

Beispiele für R mit der Bedeutung Alkylrest sind z. B. Methyl-, Ethyl-, Propyl-, Butyl-, Hexyl- und Octylreste; als Alkenylreste können Vinyl-, Allyl, Ethylallyl- und Butadienylreste; und als Arylreste sind Phenyl- und Tolylrest einsetzbar.

Beispiele für substituierte Kohlenwasserstoffreste R sind insbesondere halogenierte Kohlenwasserstoffreste wie der 3,3,3-Trifluorpropylrest, Chlorphenyl- und Bromtolylrest; und Cyanalkylreste, wie der β-Cyanethylrest.

Beispiele für Polymere als Rest R sind über Kohlenstoff an Silicium gebundene Polystyrol-, Polyvinylacetat-, Polyacrylat-, Polymetacrylat- und Polyacrylnitrilreste.

Vorzugsweise besteht der überwiegende Teil der Reste R wegen der leichteren Zugänglichkeit aus Methylgruppen. Die übrigen Reste R sind insbesondere Vinyl- und/oder Phenylgruppen.

Insbesondere im Falle des Vorliegens von unter Ausschluß von Wasser lagerfähigen, bei Zutritt von Wasser bei Raumtemperatur zu Elastomeren härtenden Formulierungen handelt es sich bei Z und Z' um hydrolysierbare Gruppen. Beispiele für solche Gruppen sind Acetoxy-, Amino-, Aminoxy-, Alkenyloxy- (z.B. $H_2C{=}(CH_3CO\text{-})$), Acyloxy- und Phosphatgruppen. Vor allem wegen der leichteren Zugänglichkeit sind als Z Acyloxygruppen, insbesondere Acetoxygruppen, bevorzugt. Es werden jedoch auch z.B. mit Oximgruppen, wie solchen der Formel
$\text{-ON}{=}C(CH_3)(C_2H_5)$, als Z ausgezeichnete Ergebnisse erzielt.

Beispiele für hydrolysierbare Atome Z sind Halogen- und Wasserstoffatome, Beispiele für Alkenylgruppen Z sind insbesondere Vinylgruppen.

Die Viskosität der im Rahmen der Erfindung verwendeten Organopolysiloxane sollte 500000 cP bei 25°C, vorzugsweise 150000 cP bei 25°C nicht übersteigen. Dementsprechend sollte der Wert x vorzugsweise 40000 nicht übersteigen.

Beispiele für verwendbare Organopolysiloxane sind z. B. die Silikonpolymere E50 (α, ω-Hydroxydimethylsilo-

xypolydimethylsiloxan) oder M50 ($\alpha$, $\omega$-Hydroxydimethylsiloxypolydimethylsiloxan) der Fa. GE Bayer Silicones.

Es können auch Gemische aus verschiedenen Organopolysiloxanen verwendet werden.

Das Vermischen dieser Organopolysiloxane mit den hydrophoben Kieselsäuren und ggf. den weiteren Bestandteilen der erfindungsgemäßen Formulierung kann in beliebig bekannter Weise, z.B. in mechanischen Mischgeräten, erfolgen. Es vollzieht sich sehr rasch und leicht, gleichgültig in welcher Reihenfolge die Zugabe der Mischungsbestandteile durchgeführt wird.

Vorzugsweise werden die erfindungsgemäß verwendeten Kieselsäuren in Mengen von 0,5 bis 60 Gew.-%, vorzugsweise 3 % bis 30 Gew.-%, bezogen auf das Gesamtgewicht der zu Elastomeren härtbaren Massen, eingesetzt.

Liegen in den reaktionsfähigen endständigen Einheiten enthaltenden Diorganopolysiloxanen als einzige reaktionsfähige endständige Einheiten solche mit Si-gebundenen Hydroxylgruppen vor, so müssen diese Diorganopolysiloxane vernetzt werden. Dies kann in an sich bekannter Weise durch das in der Luft enthaltene Wasser, gegebenenfalls unter Zugabe von weiterem Wasser mit einem Vernetzungsmittel erfolgen. Hier kann z. B. der Silopren-Vernetzer 3034 von GE Bayer Silicones, der Ethyltriacetoxysilan optional in Gegenwart eines Kondensationskatalysators in bekannter Weise eingesetzt werden. Geeignete Katalysatoren für alle erfindungsgemäßen Formulierungen sind z. B. die Silopren-Katalysatoren DBTA oder Typ 162 (Dibutylzinndiacetat) des gleichen Herstellers.

In einer besonderen Variante der erfindungsgemäßen Silikonkautschukformulierungen können zusätzlich 0,5 - 20, bevorzugt 2 - 10 Gew.-% eines Vernetzers mit der Formel

$$R'_{4-t}\ Si\ Z'_4$$

mit R' = Alkyl-, Alkoxy-, Acetoxy-, Oxim-, Amido-, Aryl-, Alkenylreste, mit 1 bis 50 Kohlenstoffatomen, unsubstituiert oder mit O, S, F, Cl, Br, I substituiert, jeweils gleich oder verschieden und/oder Polystyrol-, Polyvinylacetat-, Polyacrylat-, Polymethacrylat- und Polyacrylnitrilreste mit 5 - 5.000 Repetiereinheiten.

Z'= OH, Cl, Br, Acetoxy-, Oxim-, Amino-, Amido-, Aminoxy-, Alkenyloxy-, Aryloxy- oder Phosphatresten, wobei die organischen Reste bis zu 20 Kohlenstoffatome tragen können, jeweils gleich oder verschieden.

t= 3 oder 4

enthalten sein.

Alle Gewichtsangaben beziehen sich auf die Gesamtmenge an Silikonformulierungen.

Beispiele für Silane der oben angegebenen Formel sind Ethyltriacetoysilan, Methyltriacetoxysilan, Isopropyltriacetoxysilan, Isopropoxytriacetoxysilan, Vinyltriacetoxysilan, Methyltrisdiethylaminooxysilan, Methyltris (-cyclohexylamino)-silan, Methyltris(-diethylphosphato)-silan und Methyltris(-methylethylketoximo)-silan.

Die angeführte Kombination physikalisch-chemischer Stoffdaten der hydrophoben Fällungskieselsäure führt zu einem ausgezeichneten Verstärkerfüllstoff. Der gegenüber den bekannten Fällungskieselsäuren deutlich herabgesetzte Gleichgewichts-Feuchtegehalt bringt Vorteile bei der Verarbeitung, z.B. bei der Dispergierung. Der optimal eingestellte pH-Wert und die niedrige DBP-Zahl führen zu spürbar verkürzten Einarbeitungszeiten. Der niedrige Elektrolytgehalt in Kombination mit dem niedrigen Feuchtegehalt führt schließlich zu guten elektrischen Eigenschaften der Vulkanisate. In kalthärtenden Silikonkautschuk-Dichtungsmassen zeigt die eingesetzte hydrophobe Fällungskieselsäure aufgrund ihres geringen Wassergehaltes Vorteile für die Lagerfähigkeit der nicht ausgehärteten Massen. Der geringere Wassergehalt führt auch zu einer besseren chemischen Langzeitbelastbarkeit der Vulkanisate.

Selbstverständlich können erfindungsgemäße Formulierungen außer Organopolysiloxanen, hydrophobierte Kieselsäure, Vernetzungsmitteln und Vernetzungskatalysatoren, gegebenenfalls herkömmlicherweise meist oder häufig in zu Elastomeren härtbaren Massen verwendete Füllstoffe, enthalten. Beispiele für solche Stoffe sind Füllstoffe mit einer Oberfläche unterhalb 50 $m^2/g$, wie Quarzmehl, Kaolin, Schichtsilikate, Tonmineralien, Diatomeenerde, ferner Zikoniumsilikat und Calciumcarbonat, ferner unbehandeltes pyrogen erzeugtes Siliciumdioxid, organische Harze, wie Polyvinylchloridpulver, Organopolysiloxanharze, faserige Füllstoffe , wie Asbest, Glasfasern und organische Pigmente, lösliche Farbstoffe, Duftstoffe, Korrosionsinhibitoren, die Härtung verzögernde Mittel wie Benzotriazol und Weichmacher, wie durch Trimethylsiloxygruppen endgeblockte Dimethylpolysiloxane.

Optional können die erfindungsgemäßen RTV-1K-Silikonkautschukformulierungen 0,1 - 20, bevorzugt 0,1 - 15, besonders bevorzugt 0,1 - 10 Gew.-% (bezogen auf die Gesamtmenge der Formulierung) wasserbindende Stoffe enthalten. Geeignete Stoffe hierfür sind z. B. Carbonsäureanhydride, z. B. Essigsäureanhydrid oder Maleinsäureanhydrid, und/oder Kohlensäureester wie z. B. Diethylcarbonat, Ethylencarbonat und/oder Alkenyloxyverbindungen und/oder Ketale wie z. B. Dimethyldioxolan. Es ist möglich, ein oder mehrere dieser Stoffe einzusetzen.

Weiterhin können die Silikonkautschukformulierungen 0,01 bis 99,5 Gew.-% eines unfunktionalisierten Polysiloxans enthalten. Hier können die bereits genannten Polysiloxane eingesetzt werden, sofern sie nicht funktionalisiert sind. Ein geeignetes, unfunktionalisiertes Polysiloxan ist beispielsweise Baysilone-Öl M1000 (Polydimethylsiloxan) der Fa. GE Bayer Silicones.

Zusätzlich können die Silikonkautschukformulierungen 0,01 bis 6 Gew.-% organische oder anorganische Verbindungen der Metalle Pt, Sn, Ti und/oder Zn als Katalysator und/oder 0,01 bis 6 Gew.-% Inhibitoren und/oder 0,01 - 6 Gew.-% Stabilisatoren (wie z. B. TP 3556 von GE Bayer Silicones) und/oder 0,01 - 6 Gew.-% Funigizide und/oder Bakterizide und/oder 0,01 bis 6 Gew.-% Haftvermittler enthalten (wie z. B. Silopren-Haftvermittler 3001 von GE Bayer Silicones, mit der Zusammensetzung: Di-tert-butoxy-diacetoxysilan).

Als Katalysatoren sind insbesondere die Typen DBTA oder Type 162 (Dibutylzinnacetat) der GE Bayer Silicones oder Dioctyldizinnlaurat oder Di-n-butylbis(acetylaceton) geeignet.

Die folgenden Beispiele sollen die vorliegende Erfindung näher erläutern, ohne ihren Umfang einzuschränken.

## Beispiele:

Als silikatisches Edukt werden bevorzugt Fällungskieselsäuren eingesetzt, die eine sehr niedrige Silanolgruppendichte, d.h. eine niedriges Verhältnis Alkaliverbrauch/BET-Oberfäche, eine relativ hohe CTAB-Oberfläche bei annähernd gleicher BET-Oberfläche und einen hohen Weiß- und Reinheitsgrad besitzt.

## Herstellung - Basis - Kieselsäure

In einem Reaktionsbehälter werden 50,0 $m^3$ Wasser vorgelegt. Langsam werden 9,2 $m^3$ Wasserglaslösung und 0,9 $m^3$ $H_2SO_4$ unter Rühren zu der Vorlage gegeben, wobei in der Mischung während der Zugabe ein alkalischer pH-Wert eingehalten wird. Nach Abschluß der Zugabe von Wasserglas und $H_2SO_4$ liegt der pH-Wert der erhaltenen Suspension im alkalischen Bereich. Die Suspension wird angesäuert, abfiltriert und mit entionisiertem Wasser gewaschen. Die Trocknung der hydrophilen Basiskieselsäure kann bevorzugt durch eine Kurzzeittrocknung erfolgen Die folgenden Daten beziehen sich auf die so erhaltene, getrocknete Fällungskieselsäure.

| | |
|---|---|
| BET-Oberfläche [$m^2$/g] | 150-170 |
| CTAB-Oberfläche [$m^2$/g] | 150-170 |
| Glühverlust bez. auf die 2h/105 C°getr. Subst. ( DIN 55921) | 3 ± 0,5 |
| [%] pH-Wert 5% (Methanol.-wässr. Lsg.) (DIN 53200) 6 - 7 | |
| Leitfähigkeit (in 5 %iger wässriger Dispersion) [μS] | < 100 |
| Stampfdichte | > 250 g/L |
| Searszahl | < 13 |

Die Mischung der Basis-Kieselsäure und des Polysiloxans werden bis zu einem bestimmten Kohlenstoffgehalt durchgeführt, d. h. das Mischungsverhältnis ergibt sich aus dem rechnerischen Verhältnis zur Einstellung des geforderten Kohlenstoffgehalts.

## 1. Messverfahren

### 1.1 Methanolbenetzbarkeit

Kieselsäuren, deren Oberflächen mit nicht hydrolisierbaren, organischen Gruppen modifiziert sind, werden meist von Wasser nicht benetzt.

Diese hydrophoben Kieselsäuren lassen sich jedoch von einem Methanol/Wasser-Gemisch benetzen. Der Anteil des Methanols an diesem Gemisch - in Gewichtsprozenten ausgedrückt - ist ein Mass für die Hydrophobie der modifizierten Kieselsäure. Je höher der Methanolanteil ist, desto besser ist die Substanz hydrophobiert.

### Durchführung der Bestimmung:

In 6 Zentrifugengläser von 15 ml Inhalt werden jeweils 200 mg hydrophobe Kieselsäure oder Silikat eingewogen und jedes der Gläser mit 8 ml eines Methanol-Wasser-Gemisches steigender Methanolkonzentration versetzt. Die Methanolkonzentration der Gemische richtet sich nach der zu erwartenden Methanolbenetzbarkeit. Die Zentrifugenfläser werden dicht verschlossen und dann kräftig geschüttelt (10 auf- und Abwärtsbewegungen). Zur Abtrennung der bentzten Kieselsäure-Silikatanteile werden die Gläser dann 5 Minuten bei 2500 UpM zentriguiert. Die benetzten Anteile bilden einen Bodensatz, dessen Volumina an der Skala der Zentrifugengläser abgelesen werden. Die Sediment-Volumina werden in einer Grafik gegen die Methanol-Wasser-Gemisch-Konzentration aufgetragen. Diese einzelnen Meßpunkte ergeben eine Kurve, deren Lage und Steilheit den Hydrophobierungsgrad der untersuchten Probe charakterisiert.

**Geräte:**

Präzisionswaage
Zentrifuge
Zentrifugengläser, graduiert
Dispensetten

## 1.2 DBP-Aufnahme

Die DBP-Aufnahme (DBP-Zahl), die ein Mass für die Saugfähigkeit der Fällungskieselsäure ist, wird wie folgt bestimmt:

Die Bestimmung der Dibutylphthalat-Zahl erfolgt mit dem Brabender-Plastographen. Die DBP-Zahl ist ein Mass für die Saugfähigkeit bzw. das Aufnahmevermögen eines pulverförmigen Produktes an Flüssigkeit. Das Aufnahmevermögen ist abhängig vom Feuchtegehalt, der Körnung und Einwaage des untersuchten Materials.

**Geräte und Reagenzien**

Brabender-Plastograph mit Schreibvorrichtung Multi-Dosimat E 415 (50 l) der Firma Metrohm Dibutylphthalat.

**Durchführung**

12,5 g Kieselsäure werden in den Kneter des Brabender- Plastographen gegeben. Unter ständigem Mischen (Umlaufgeschwindigkeit der Kneterschaufeln 125 UpM) fliesst Dibutylphthalat mit einer Geschwindigkeit von 4 ml/Minute in die Mischung. Das Einmischen erfordert nur geringen Kraftbedarf. Gegen Ende der Bestimmung wird das Gemisch schlecht rieselfähig. Diese Tatsache dokumentiert sich in einem Anstieg des Kraftbedarfes, der auf einer Skala angezeigt wird. Bei einem Skalenausschlag von 300 wird die DBP-Dosierung automatisch abgeschaltet.

**Auswertung**

Die Dichte von DBP beträgt 1,047 g/ml. Die DBP-Aufnahme wird auf die wasserfreie, getrocknete Substanz bezogen. Bei Verwendung von Fällungskieselsäuren mit höheren Feuchtigkeitsgehalten ist, wenn diese Fällungskieselsäuren vor der Bestimmung der DBP-Zahl nicht getrocknet werden, der Wert mittels der Korrekturtabelle zu korrigieren.

Korrekturtabelle für Dibutylphthalataufnahme - wasserfrei -

| % Wasser | Korrekturwert | | | | |
|---|---|---|---|---|---|
| | ,0 | ,2 | ,4 | ,6 | ,8 |
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |

(fortgesetzt)

| % Wasser | Korrekturwert | | | | |
|---|---|---|---|---|---|
| 10 | 45 | 45 | 46 | 46 | 47 |

Der Korrekturwert entsprechend dem Wassergehalt wird dem experimentell bestimmten DBP-Wert zu addiert; z. B. würde ein Wassergehalt von 5,8 % einen Zuschlag von 33 g/100g für die DBP-Aufnahme bedeuten.

**1.3 Teilchengröße**

Die Teilchengröße wird mit einem "Malvern Mastersizer" in Ethanol nach 5minütiger Ultraschallbehandlung bestimmt. Die Messung erfolgt automatisch und liefert die mittlere Teilchengröße $d_{4.3}$ aus einer Volumenverteilung.

**1.4 Bestimmung des Normfarbwertes $R_y$ nach DIN 5033**

__Anwendung__

Mit dem Spektralphotometer Datacolor 3890 wird der Normfarbwert $R_y$ bei Kieselsäuren, Silikaten und Zeolithen (Pulver-Suspension) bestimmt.

__Durchführung der Bestimmung:__

Die zu vermessende Kieselsäure wird zunächst auf einen mittleren Teilchendurchmesser von ca. 8 bis 15 µm vermahlen und anschließend mit einer Pulverpresse zu einer Tablette verpreßt. Die benötigte Menge hängt von der Feinteiligkeit des Pulvers ab. Es wird soviel Pulver eingefüllt, dass das Gewinde des Pressenverschlusses den letzten Gang erreicht. Dazu werden die Proben unter das Meßgerät gelegt und an dem Steuerungsrechner der Menüpunkt Weißgradmessung $R_y$ und $R_{460}$ ausgewählt. Nach der Eingabe der Probenbezeichnung wird die "Space"-Taste zum Start der Messung betätigt. Nach der Eingabe des Speichercodes werden die Meßwerte ausgedruckt. Die Ausrechnung der Werte erfolgt automatisch nach der Formel:

$$y = \sum_{400}^{700} S*(\lambda) * Y(\lambda) * R(\lambda)$$

wobei

Y ( λ ) die Normspektralwertfunktion
S ( λ ) relative spektrale Strahlungsverteilung der Beleuchtungsquelle und
R ( λ ) den spektralen Remissionsgrad der Probe bedeuten.

**1.5 Bestimmung der Sears-Zahl von Kieselsäuren, Silikaten und hydrophoben Kieselsäuren**

1. __Anwendung:__

Durch Titration mit 0.1 N KOH im Bereich von pH 6 bis pH 9 lassen sich freie OH-Gruppen erfassen.

2. __Geräte__

2.1 Präzisionswaage auf 0.01 g genau
2.2 Memotitrator DL 70, Fa. Mettler, ausgerüstet mit 10 ml und 20 ml Bürette, 1 pH-Elektrode sowie 1 Pumpe (z. B. NOUVAG-Pumpe, Typ SP 40/6)
2.3 Drucker
2.4 Titriergefäß 250 ml Fa. Mettler

2.5 Ultra-Turrax 8000-24000 UpM
2.6 Thermostatisiertes Wasserbad
2.7 2 Dispenser 10-100 ml zur Dosierung von Methanol bzw. entionisiertem Wasser
2.8 1 Dispenser 10-50 ml zur Dosierung von entionisiertem Wasser
2.9 1 Meßzylinder 100 ml
2.10 IKA Universalmühle M 20

3. **Reagenzien**

3.1 Methanol p.A.
3.2 Natriumchlorid-Lösung, (250 g NaCl p. A. in 1000 ml entionisiertem Wasser)
3.3 0.1 N Salzsäure
3.4 0.1 N Kalilauge
3.5 entionisiertes Wasser
3.6 Pufferlösungen pH 7 und pH 9

4. **Durchführung**

4.1 Probenvorbereitung
Ca. 10 g Probe werden 60 Sekunden in der IKA-Universalmühle M 20 gemahlen.
Wichtig: Da nur sehr fein vermahlene Proben zu reproduzierbaren Ergebnissen führen, müssen diese Bedingungen genau eingehalten werden.
4.2 Durchführung der Analyse

4.2.1 2,50 g der nach Punkt 4.1 vorbereiteten Probe in ein 250 ml Titriergefäß einwiegen
4.2.2 60 ml Methanol p.A. zudosieren.
4.2.3 Nach vollständiger Benetzung der Probe 40 ml entionisiertes Wasser zugeben.
4.2.4 Mittels Ultra Turrax 30 Sekunden bei einer Drehzahl von ca. 18000 UpM dispergieren.
4.2.5 Mit 100 ml entionisiertem Wasser die am Gefäßrand und Rührer anhaftenden Probepartikel in die Suspension spülen.
4.2.6 Probe in einem thermostatisiertem Wasserbad auf 25 °C temperieren (mindestens 20 Minuten).
4.2.7 pH-Elektrode mit den Pufferlösungen pH 7 und pH 9 kalibrieren.
4.2.8 Probe wird nach der Methode S 911 im Memotitrator DL 70 titriert. Bei nicht eindeutigem Titrationsverlauf wird nachträglich eine Doppelbestimmung durchgeführt.

Als Ergebnisse werden ausgedruckt:
pH
$V_1$ in ml/5 g
$V_2$ in ml/5 g

5. **Berechnung:**

$$V_1 = \frac{V * 5}{E}$$

$$V_2 = \frac{V * 5}{E}$$

$V_1$ = ml KOH bzw. ml HCl bis pH 6 / 5 g Substanz
$V_2$ = ml KOH-Verbrauch bis pH 9 / 5 g Substanz
E = Einwaage

**Prinzip:**

Zunächst wird der Ausgangs-pH-Wert der Suspension gemessen, danach wird je nach Ergebnis mit KOH bzw. HCl der pH-Wert auf 6 eingestellt. Danach werden 20 ml NaCl-Lösung zudosiert. Mit 0.1 N KOH wird dann die Titration bis zum pH-Wert 9 fortgesetzt.

Sears-Zahlen

$$Si-OH + NaCl \Rightarrow Si-ONa + HCl$$

$$HCl + KOH \Rightarrow KCl + H_2O$$

**1.6 Bestimmung der Stampfdichte in Anlehnung an DIN/ISO 787/11**

**Durchführung der Bestimmung:**

10 g der zu untersuchenden Probe werden auf der Präzisionswaage auf 0,01 g genau abgewogen und in den graduierten 250 ml Glaszylinder des Stampfvolumens eingefüllt. Nach 1250 Stampfungen wird das Volumen des gestampften Materials abgelesen.

**Berechnung:**

$$\text{Stampfdichte:} \quad g/l = \frac{E \bullet 1000}{I}$$

Das Stampfvolumen entspricht dem abgelesenen Wert.

E = Einwaage in g
I = Inhalt in ml

**Geräte:**

Präzisionswaage

| | |
|---|---|
| Stampfvolumeter | Fa. Engelsmann, Ludwigshafen |
| 250 ml Glaszylinder graduiert | Fa. Engelsmann, Ludwigshafen |

**Anmerkungen:**

In Sonderfällen kann das Material vor dem Einwiegen durch ein 500 µm-Sieb abgesiebt bzw. die Einwaage

erhöht werden. Dieses muss im Prüfbericht angegeben werden.

### 1.7 Bestimmung der CTAB-Oberfläche

**1. Anwendung**

Die Methode beruht auf der Adsorption von CTAB (N-Cetyl-N,N,N-trimethylammoniumbromid) an der "äußeren" Oberfläche, die auch als "kautschukwirksame Oberfläche" bezeichnet wird.

Die Adsorption von CTAB erfolgt in wässriger Lösung unter Rühren und Ultraschallbehandlung. Überschüssiges, nicht adsorbiertes CTAB wird durch Rücktitration mit NDSS (Dioctylnatriumsulfosuccinat-Lösung) mit einem Titroprozessor ermittelt, wobei der Endpunkt durch das Maximum der Trübung der Lösung gegeben ist und mit einer Phototrode bestimmt wird.
Für die Berechnung wird ein Platzbedarf von 0.35 $nm^2$ pro CTAB-Molekül angenommen.

Die Bestimmung erfolgt in Anlehnung an ASTM 3765.
Bei jeder Meßreihe ist eine Standardprobe der Kieselsäure Typ VN 3 mit zu prüfen.

**2. Reaktionsgleichung: (Rücktitration)**

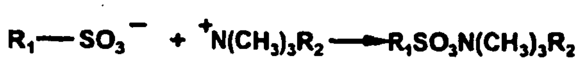

NDSS CTAB

**3. Geräte:**

3.1 Mühle, z. B. Fabrikat IKA, Typ: M 20
3.2 Analylsenwaage
3.3 Magnetrührer
3.4 Magnetrührstäbchen
3.5 Titroprozessor, z. B. METTLER, Typ DL 55 oder DL 70, ausgerüstet mit: pH-Elektrode, z. B. Fabrikat Mettler, Typ DG 111 Phototrode, z. B Fabrikat Mettler, Typ DP 550 und Kolbenbürette, 20 ml Inhalt für NDSS-Lösung Kolbenbürette, 10 ml Inhalt für KOH, 0.1 N
3.6 Titrierbecher 100 ml aus Polypropylen
3.7 Titrierglasgefäß, 150 ml Inhalt, verschließbar mit Schnappdeckel
3.8 Erlenmeyerkolben, 100 ml Inhalt, verschließbar mit Schraubverschluß oder NS-Stopfen
3.9 Ultraschallbad
3.10 Druckfiltrationsgerät
3.11 Membranfilter a. Cellulosenitrat, Porengröße 0.1 µm, 47 mm Ø, z. B. Sartorius, Typ 113 58
3.12 Pipetten, 5 ml, 100 ml

**4. Reagenzien:**

4.1 Kalilauge, 0.1 N
4.2 CTAB-Lösung, 0.0151 mol/l
5.50 g CTAB werden in einem Becherglas in ca. 800 ml warmem (ca. 30-40 °C), entmineralisiertem Wasser unter Rühren (Magnetrührer) gelöst, in einem 1 1-Meßkolben überführt, mit entmineralisiertem Wasser nach Abkühlung auf 23-25 °C bis zur Marke aufgefüllt und in eine Vorratsflasche umgefüllt.
**Achtung:**
Aufbewahrung der Lösung und Durchführung der Bestimmung müssen bei ≥ 23 °C erfolgen, da CTAB unterhalb dieser Temperatur auskristallisiert. Die Lösung sollte 10-14 Tage vor Gebrauch hergestellt werden.
4.3 NDSS-Lösung 0.00426 mol/l
1.895 g NDSS (Dioctylnatriumsulfosuccinat) werden in einem Becherglas mit ca. 800 ml entmineralisiertem Wasser

versetzt und mit einem Magnetrührer gerührt, bis sich alles gelöst hat. Anschließend wird die Lösung in einem 1 Meßkolben überführt, mit entmineralisiertem Wasser bis zur Marke aufgefüllt und in eine Vorratsflasche umgefüllt. NDSS-Lösung wird leicht biologisch abgebaut. Die hergestellte Lösung ist deshalb gut zu verschließen und sollte nicht länger als 3 Monate gelagert werden.
Die Konzentration der CTAB-Lösung ist als exakt angenommen: 0.0151 mol/l.
Die Konzentration der NDSS-Lösung ist täglich durch eine "Blindtitration" zu bestimmen.

## 5. Durchführung

5.1 Blindtitration (Bestimmung der Konzentration der NDSS-Lösung).
5.2 Der Verbrauch an NDSS-Lösung für 5 ml CTAB-Lösung ist 1 x täglich vor jeder Meßreihe zu prüfen (Blindwert).
5.1.2. Genau 5 ml CTAB-Lösung in Titrierbecher pipettieren.
5.1.3. Ca. 50 ml entmineralisiertes Wasser zufügen.
5.1.4. Titration mit dem Titroprozessor bis zum Ende der Titration. Jede Blindtitration ist als Doppelbestimmung auszuführen, bei nicht übereinstimmenden Werten sind weitere Titrationen durchzuführen, bis die Reproduzierbarkeit der Ergebnisse gegeben ist.
5.2 Adsorption
5.2.1 Die granulierten und krobkörnigen Proben werden in einer Mühle vermahlen. (Das Schlagmesser der Mühle muß bedeckt sein).
5.2.2 Genau 500 mg der vermahlenen Probe auf der Analysenwaage mit einer Genauigkeit von 0.1 mg einwiegen.
5.2.3 Abgewogene Probemenge quantitativ in ein 150 ml-Titriergefäß mit Magnetrührstäbchen überführen.
5.2.4 Genau 100 ml CTAB-Lösung zudosieren, Titriergefäß mit Deckel verschließen und 15 Minuten auf einem Magnetrührer rühren.
5.2.5 Titriergefäß an den Titroprozessor schrauben und pH-Wert der Suspension mit KOH, 0.1 mol/l, auf einen Wert von ± 0.05 einstellen.
5.2.6 4 Minuten Behandlung der Suspension im Ultraschallbad.
5.2.7 Filtration durch ein mit Membranfilter bestücktes Druckfilter. Während der Adsorption ist unbedingt darauf zu achten, dass die Temperatur im Bereich von 23 °C und 25 °C gehalten wird.
5.3 Titration
5.3.1 5 ml Filtrat (s. Punkt 5.2.7) in 100 ml Titrierbecher pipettieren und mit entmineralisiertem Wasser auf ca. 50 ml auffüllen.
5.3.2 Titrierbecher an den Titrator schrauben.
5.3.3 Titration mit NDSS-Lösung nach vorgegebener Meßmethode bis zur maximalen Trübung.
Jede Trübung ist als Doppelbestimmung auszuführen, bei nicht übereinstimmenden Werten sind weitere Titrationen durchzuführen, bis die Reproduzierbarkeit der Ergebnisse gegeben ist.

## 6. Berechnung

$$m^2/g = (V_1 - V_2) * \frac{100 * E * 2 * 578.435}{V_1 * 1000}$$

$$m^2/g = (V_1 + V_2) * \frac{115.687 * E}{V_1}$$

$$M^2/g = (V_1 + V_2) * \frac{115.687}{V^1} * 5.5$$

$V_1$ = Blindprobe (ml NDSS bei Anwendung von 5 ml CTAB)
$V_2$ = Verbrauch (ml NDSS bei Anwendung von 5 ml Filtrat)
E = Einwaage g CTAB/l (5.5 g)
578.435 = Platzbedarf von 1 g CTAB in $m^2$.

Der Meßwert ist üblicherweise korrigiert auf die wasserfreie Substanz anzugeben:

$$m^2/g = \frac{CTAB\ m^2/g * 100}{100 - \%\ H_2O}$$

Weicht der Meßwert der Standardprobe um mehr als 3 ± $m^2$/g vom Sollwert ab, so ist die gesamte Meßreihe zu wiederholen.

**7. Anmerkung**

zu 1. In der Literatur wird NDSS (Dioctylnatriumsulfosuccinat) auch Aerosol OT genannt.
An den Proben mit einem pH-Wert > 9, wie z. B. Extrusil, wird der pH-Wert gemessen, aber nicht korrigiert, weil die Säure die Oberfläche verändern kann.
Die Phototrode wird vor Beginn der Titration auf 1000 mV eingestellt, entsprechend einer Transparenz von 100 %.

zu 3. Für das Abmessen der vorgegebenen unterschiedlichen Volumina der CTAB-Lösung können auch Dispenser bzw. Kolbenhubpipetten verwendet werden, soweit diese regelmäßig kalibriert werden.

zu 4. Die unter Punkt 4.1 und 4.3 angegebenen Lösungen sind auch als gebrauchsfertige Lösungen zu beziehen.
Lieferant ist z. Z. Firma Kraft, Duisburg.
Telefon: 0203-58-3025.

-Bestell-Nr. 6056.4 CTAb-Lösung 0.0151 ml/l
-Bestell-Nr. 6057.4 NDSS-Lösung 0.00423 mol/l

(in glasflaschen ä 2,5 Liter)

zu 5.2.4 Hydrophobe Proben, die nach dem Rühren nicht benetzt sind, werden vor der Einstellung des pH-Wertes mit einem ULTRA-TURRAX vorsichtig dispergiert, um sie zu benetzen.

zu 5.2.5 Für die Einstellung des pH-Wertes empfiehlt sich die Verwendung eines Titrators.
Die Titration wird nach der Endpunktmethode durchgeführt.

zu 5.2.7 Für die Filtration wird Stickstoff aus einer Druckgasflasche verwendet, es ist ein Vordruck von 4-6 bar einzustellen.

zu 6. Bei einer eventuell erforderlichen Wiederholung einer Meßreihe ist insbesondere darauf zu achten, dass auch das für die Einstellung des pH-Wertes verwendete pH-Meter nochmals neu kalibriert wird.

**1.8 Bestimmung der Wasserdampfaufnahme (Wasserdampfisothermen)**

Zur Bestimmung der Wasserdampfaufnahme wird die Probe bei konstanter Temperatur (30 °C) unterschiedlichen relativen Luftfeuchten ausgesetzt. Es wird gewartet, bis sich ein konstantes Gewicht eingestellt hat.
Es wird mit völlig trockener Luft (d. h. Luftfeuchtigkeit näherungsweise gleich Null) gestartet. Nach dem Erreichen des Gleichgewichts wird dieses Gewicht als Bezugspunkt gewählt, d. h. die Wasserdampfaufnahme bei einer höheren Luftfeuchte wird als Differenz zwischen dem Probengewicht in völlig trockener Luft (nach Gleichgewichtseinstellung) und dem Probengewicht in feuchter Luft (nach Gleichgewichtseinstellung) ausgedrückt. Die Luftfeuchtigkeit wird in 10

%-Schritten variiert.
Um Hystereseeffekte auszuschließen, wird sowohl die Wasseradsorption wie auch die Wasserdampfdesorption gemessen.

## Beispiel 1

Die Trocknung und Belegung der Basis Kieselsäure mit Silikonöl (DOW CORNING (R) 200 FLUID 50 CS, Kohlenstoffgehalt ca. 33 %, Viskosität von 50 mPas) erfolgt über einen Spin-Flash-Trockner. Dann wird die Kieselsäure mindestens 48 Stunden bei Raumtemperatur konditioniert bis sie eine Methanolbenetzbarkeit von mindestens 20 % aufweist. Die analytischen Daten der konditionierten Kieselsäure stehen in der Tabelle 1.1.

**Tabelle 1.1**

| Analytische Daten der konditionierten Kieselsäure | | |
|---|---|---|
| Wasser | % | 5,2 |
| pH-Wert | | 6,1 |
| Leitfähigkeit | µS | 41 |
| $N_2$-Oberfläche | $m^2/g$ | 84 |
| CTAB-Oberfläche | $m^2/g$ | 132 |
| Stampfdichte | g/L | 317 |
| Remission | % | 95,9 |
| C-Gehalt | % | 4,12 |
| Methanolbenetzbarkeit | % | > 20 |

Dann erfolgt die Temperung im Wirbelbett bei unterschiedlichem Sauerstoffgehalten. Die Versuchsparameter stehen in der Tabelle 1.2.

**Tabelle 1.2**

| Temperung im Wirbelbett bei unterschiedlichem Sauerstoffgehalt: | | | |
|---|---|---|---|
| | Versuch 1 | Versuch 2 | Versuch 3 |
| Temperzeit [min] | 60 | 60 | 60 |
| Produkttemperatur [°C] | 320-380 | 320-380 | 320-380 |
| Sauerstoffgehalt [%] | 0-0,001 | 4,0 - 6,0 | 20-22 |
| C-Gehalt vor d. Temp. | 4,12 | 4,12 | 4,12 |

Die Versuche zeigen den Zusammenhang zwischen Sauerstoffgehalt und Verfärbung. Nur bei den Versuchen 2 und 3 wird eine Remission > 94% erreicht. Diese Kieselsäuren zeigen im Silikonkautschuk -im Gegensatz zur Kieselsäure aus Versuch 1- keine sichtbare Verfärbung. Die analytischen Daten der oxidierend getemperten Fällungskieselsäure stehen in Tabelle 1.3.

**Tabelle 1.3**

| Analytik: | | | |
|---|---|---|---|
| | Versuch 1 | Versuch 2 | Versuch 3 |
| MeOH-Benetzbarkeit | 63 | 63 | 63 |
| C-Gehalt nach der Temp. | 3,96 | 3,47 | 3,39 |
| Remission | 92,8 | 94,5 | 94,9 |

**Beispiel 2**

Die Basis-Kieselsäure wird im Gericke-Mischer im Masseverhältnis 1:1 mit Silikonöl (Dimethylpolysiloxan, 50 mPas, z. B. DOW CORNING (R) 200 FLUID 50 CS, Kohlenstoffgehalt ca. 33 %) belegt. Das so entstandene Pulver wird eine Stunde bei einer Temperatur von 105 °C konditioniert. Dabei entsteht ein Material, das zwar wasserbenetzbar ist, bei dem sich jedoch Kieselsäure und Silikonöl in Wasser nicht mehr voneinander trennen. Durch Mischen dieses Masterbatches mit Filterkuchen der Basis-Kieselsäure entstehen stabile Formulierungen, bei denen sich das Silikonöl nicht mehr vom hydrophilen Filterkuchen abtrennt. Ein so hergestellter hydrophober Masterbatch und Filterkuchen werden zusammen in den Spin-Flash-Trockner gefördert, dort vermischt und getrocknet. Die dimethylsiloxanbehandelte Kieselsäure wird durch eine 3-tägige Alterung bei Raumtemperatur konditioniert, bis sie eine Methanolbenetzbarkeit von mindestens 20 % erreicht hat. Die analytischen Daten der konditionierten Kieselsäure stehen in der Tabelle 2.1.

**Tabelle 2.1**

| Analytische Daten der konditionierten Kieselsäure | | |
|---|---|---|
| Wasser | % | 3,4 |
| pH-Wert | | 6,3 |
| Leitfähigkeit | µS | 100 |
| $N_2$-Oberfläche | $m^2$/ g | 74 |
| CTAB-Oberfläche | $m^2$/ g | 119 |
| DBP-Aufnahme | g/ 100g | 198 |
| Stampfdichte | g/ L | 323 |
| Remission | % | 95,9 |
| C-Gehalt | % | 5,03 |
| Methanolbenetzbarkeit | % | > 20 |

Die Temperung der konditionierten Fällungskieselsäure erfolgt unter oxidierenden Bedingungen im Muffelofen bei einer Schütthöhe von ca. 1 bis 2 cm, bei einer Temperatur über 330 - 360 °C für 1 h. Die analytischen Daten der oxidierend getemperten Fällungskieselsäure stehen in Tabelle 2.3:

**Tabelle 2.3**

| Produktdaten, oxidierend getempertes Material | | |
|---|---|---|
| $N_2$-Oberfläche | $m^2$/ g | 96 |
| CTAB-Oberfläche | $m^2$/ g | 41 |
| Remission | % | 94,5 |
| C-Gehalt | % | 3,93 |
| Methanolbenetzbarkeit | ca.% | 67 |

**Beispiel 3**

Die Vorverteilung von Silikonöl (Viskosität von 50 mPas, methylterminiert, z. B. DOW CORNING (R) 200 FLUID 50 CS Kohlenstoffgehalt ca. 33 %) auf der Kieselsäure (in Form von Filterkuchen) -bei gleichzeitiger Trocknung- erfolgt im Spin-Flash-Trockner. Die dimethylsiloxanbehandelte Kieselsäure wird mindestens 48 Stunden bei Raumtemperatur konditioniert, bis sie eine Methanolbenetzbarkeit von mindestens 20 % erreicht hat. Die analytischen Daten der konditionierten Kieselsäure stehen in der Tabelle 3.1.

**Tabelle 3.1**

| Analytische Daten der konditionierten Kieselsäure | | |
|---|---|---|
| Wasser | % | 5,2 |

(fortgesetzt)

| Analytische Daten der konditionierten Kieselsäure | | |
|---|---|---|
| pH-Wert | | 6,1 |
| Leitfähigkeit | µS | 41 |
| $N_2$-Oberfläche | $m^2$/ g | 84 |
| CTAB-Oberfläche | $m^2$/ g | 132 |
| Stampfdichte | g/ L | 317 |
| Remission | % | 95,9 |
| C-Gehalt | % | 4,12 |
| Methanolbenetzbarkeit | % | > 20 |

Die Temperung des Materials erfolgt unter oxidierenden Bedingungen im Muffelofen bei einer Schütthöhe von ca. 1 bis 2 cm, bei einer Temperatur über 330 - 360 °C für 1 h. Die analytischen Daten der oxidierend getemperten Fällungskieselsäure stehen in Tabelle 3.2.

**Tabelle 3.2**

| Produktdaten, oxidierend getempertes Material | | |
|---|---|---|
| $N_2$-Oberfläche | $m^2$/ g | 102 |
| Remission | % | 94,7 |
| C-Gehalt | % | 3,59 |
| Methanolbenetzbarkeit | ca.% | 67 |

**Beispiel 4**

Die Basis-Kieselsäure wird im Gericke-Mischer im Masseverhältnis 1:1 mit Silikonöl (Dimethylpolysiloxan 50 mPas, z. B. DOW CORNING (R) 200 FLUID 50 CS Kohlenstoffgehalt ca. 33 %) belegt. Das so entstandene Pulver wird mindestens eine Stunde bei einer Temperatur von 105 °C konditioniert. Dabei entsteht ein Material, das zwar wasserbenetzbar ist, bei dem sich jedoch Kieselsäure und Silikonöl in Wasser nicht mehr voneinander trennen. Durch Mischen dieses Masterbatches mit Wasser entstehen stabile Suspensionen, bei denen sich das Silikonöl nicht mehr von der Kieselsäure abtrennt. Die analytischen Daten des Suspension stehen in Tabelle 4.1.

**Tabelle 4.1**

| Suspensionsdaten | | |
|---|---|---|
| Feststoffgehalt | % | 12,8 |
| pH-Wert | | 5,2 |
| Leitfähigkeit | µS | 382 |
| Viskosität | mPas | 183 |

Die Trocknung der Suspension erfolgt über einen Sprühtrockner. Die dimethylsiloxanbehandelte Kieselsäure wird durch eine mindestens 48-stündige Alterung bei Raumtemperatur konditioniert, bis sie eine Methanolbenetzbarkeit von mindestens 20 % erreicht hat. Die analytischen Daten der konditionierten Kieselsäure stehen in der Tabelle 4.2.

**Tabelle 4.2**

| Analytische Daten der konditionierten Kieselsäure | | |
|---|---|---|
| Glühverlust | % | 12,4 |
| Wasser | % | 2,2 |

(fortgesetzt)

| Analytische Daten der konditionierten Kieselsäure | | |
|---|---|---|
| pH-Wert | | 6,4 |
| Leitfähigkeit | μS | 135 |
| $N_2$-Oberfläche | $m^2$/ g | 80 |
| CTAB-Oberfläche | $m^2$/ g | 131 |
| DBF-Aufnahme | g/ 100g | 236 |
| Stampfdichte | g/ L | 256 |
| Remission | % | 94,5 |
| C-Gehalt | % | 4,21 |
| Methanolbenetzbarkeit | % | > 20 % |

Die Temperung der konditionierten Fällungskieselsäure erfolgt unter oxidierenden Bedingungen im Muffelofen bei einer Schütthöhe von ca. 1 bis 2 cm, bei einer Temperatur über 330 - 360 °C für 1 h. Die analytischen Daten der oxidierend getemperten Fällungskieselsäure stehen in Tabelle 4.3.

**Tabelle 4.3**

| Produktdaten, oxidierend getempert | | |
|---|---|---|
| Wasser | % | 0,6 |
| $N_2$-Oberfläche | $m^2$/ g | 91 |
| CTAB-Oberfläche | $m^2$/ g | 52 |
| Remission | % | 94,3 |
| C-Gehalt | % | 4,01 |
| Methanolbenetzbarkeit | ca.% | 66 |

**Beispiel 5**

In eine Kieselsäuresuspension der Basiskieselsäure (12,8 % Feststoffgehalt) wird mit Hilfe eines stark scherenden Mischaggregat Silikonöl (Polydimethylsiloxan, 50 mPas, z. B. DOW CORNING (R) 200 FLUID 50 CS, Kohlenstoffgehalt ca 33 %) suspendiert. Die Verteilung des Silikonöls in der Kieselsäuresuspension wird durch eine sofortige Sprühtrocknung konserviert. Die dimethylsiloxanbehandelte Kieselsäure wird durch eine mindestens 48-stündige Alterung bei Raumtemperatur konditioniert, bis sie eine Methanolbenetzbarkeit von mindestens 20 % erreicht hat. Die analytischen Daten der konditionierten Kieselsäure stehen in der Tabelle 5.1.

**Tabelle 5.1**

| Analytische Daten der konditionierten Kieselsäure | | |
|---|---|---|
| Glühverlust | % | 13,0 |
| Wasser | % | 2,2 |
| pH-Wert | | 5,5 |
| Leitfähigkeit | μS | 100 |
| $N_2$-Oberfläche | $m^2$/ g | 85 |
| CTAB-Oberfläche | $m^2$/ g | 137 |
| DBP-Aufnahme | g/ 100g | 253 |
| Stampfdichte | g/ L | 270 |
| Remission | % | 94,2 |

(fortgesetzt)

| Analytische Daten der konditionierten Kieselsäure | | |
|---|---|---|
| C-Gehalt | % | 4,78 |
| Methanolbenetzbarkeit | % | > 20 % |

Die Temperung des Materials erfolgt unter oxidierenden Bedingungen im Muffelofen bei einer Schütthöhe von ca. 1 bis 2 cm, bei einer Temperatur über 330 - 360 °C für 1 h. Die analytischen Daten der oxidierend getemperten Fällungskieselsäure stehen in der Tabelle 5.2.

**Tabelle 5.2**

| Produktdaten, oxidierend getempert | | |
|---|---|---|
| Wasser | % | 1,6 |
| $N_2$-Oberfläche | $m^2$/ g | 102 |
| CTAB-Oberfläche | $m^2$/ g | 43 |
| Remission | % | 94,2 |
| C-Gehalt | % | 3,44 |
| Methanolbenetzbarkeit | ca.% | 65 |

**Beispiel 6**

Die hydrophobe Basiskieselsäure wurde trocken mit Silikonöl (Polydimethylsiloxan, Viskosität 50 mPas, z. B. DOW CORNING (R) 200 FLUID 50 CS, Kohlenstoffgehalt ca. 33 %) belegt und durch eine mindestens 48-stündige Alterung bei Raumtemperatur konditioniert, bis sie eine Methanolbenetzbarkeit von mindestens 20 % erreicht hat. Die Temperung des Materials erfolgt unter oxidierenden Bedingungen, bei einer Temperatur über 330-360 °C für 1h. Die analytischen Daten des resultierenden Materials stehen in der Tabelle 6.1.

**Tabelle 6.1**

| Produktdaten, oxidierend getempert | | |
|---|---|---|
| Wasser | % | 1,1 |
| Glühverlust | | 4,3 |
| $N_2$-Oberfläche | $m^2$/ g | 89 |
| pH-Wert | | 7,9 |
| Leitfähigkeit | µS | 40 |
| DBP | % | 189 |
| C-Gehalt | % | 3,9 |
| Remission | % | 95 |
| Methanolbenetzbarkeit | % | 67 |

**Beispiel 7**

Es wurde eine hydrophobe Fällungskieselsäure mit den Eigenschaften gemäß Tabelle 1 hergestellt und in eine RTV-1K-Silikonkautschukmischung gemäß Tabelle 2 eingearbeitet. Tabelle 3 zeigt das rheologische Verhalten dieser RTV-1K-Silikondichtmasse mit unterschiedlichen Füllgraden an Kieselsäure. Als Standardkieselsäure wurden pyrogene Kieselsäuren der Typen AEROSIL 150 (hydrophil) und AEROSIL R 974 sowie AEROSIL R 972 (hydrophob) eingesetzt. Die Tabelle zeigt einen deutlichen Anstieg der Viskosität mit steigendem Füllgrad an hydrophober Fällungskieselsäure, so dass das Rheologieniveau einer Standardformulierung mit AEROSIL 150 ab einem Füllgrad von ca. 17 Gew.-% erreicht wird.

**Tabelle 1** Physikalisch-chemische Daten der verwendeten hydrophoben Fällungskieselsäure

| Glühverlust [%] | Trocknungsverlust [%] | pH-Wert | BET-Oberfläche [$m^2/g$] | CTAB-Oberfläche [$m^2/g$] | DBP-Absorption [g/100 g] | Stampfdichte [g/l] | Mittlere Teilchengröße [$\mu m$] | Methanolbenetzbarkeit [%] | Kohlenstoff-gehalt [%] |
|---|---|---|---|---|---|---|---|---|---|
| 9 | 1 | 8.1 | 79 | 48 | 163 | 143 | 11.9 | 68 | 5.09 |

**Tabelle 2**

| | |
|---|---|
| 62,4 % Siliconpolymer | OH terminiert z. B. M 50 von GEBS |
| 24,6 % Siliconöl | Nicht funktionalisiert z. B. M 1000 von GEBS Zusammensetzung: $\alpha$, $\omega$-Trimethylsiloxypolydimethylsiloxan |
| 3,99 % Vernetzer | z. B. Silopren-Vernetzer 3034 von GEBS Zusammensetzung: Ethyltriacetoxysilan |
| 1,0 % Haftvermittler | z. B. Silopren-Haftvermittler 3001 von GEBS Zusammensetzung: Di-tert-butoxy-diacetoxysilan |
| 0,01 % Katalysator | z. B. Silopren-Katalysator DBTA von GEBS Zusammensetzung: Dibutylzinndiacetat |
| 8,0 % Kieselsäure | hydrophobe Fällungskieselsäure<br>oder Abmischungen<br>mit hydrophiler pyrogener Kieselsäure<br>(z. B. AEROSIL 300 Degussa AG)<br>oder<br>hydrophober pyrogener Kieselsäure<br>(z. B. AEROSIL R 812 S Degussa AG) |
| GEBS: Fa. GE Bayer Silicones | |

**Tabelle 3** Rheologische Eigenschaften der RTV-1K-Formulierungen

| Test Nr. | Füllgrad [Gew.-%] | Fließgrenze [Pa] | Viskosität [Pa*s] |
|---|---|---|---|
| 513 | Kieselsäure gemäß Tabelle 1 [8 %] | 0 | 28 |
| 530 | Kieselsäure gemäß Tabelle 1 [15 %] | 2 | 59 |
| 547 | Kieselsäure gemäß Tabelle 1 [17 %] | 10 | 102 |
| 518 | Kieselsäure gemäß Tabelle 1 [20 %] | 75 | 310 |
| 474 | AEROSIL 150 [8 %] | 398 | 147 |
| 484 | AEROSIL R 974 [8 %] | 357 | 142 |
| 388 | AEROSIL R 972 [8 %] | 184 | 114 |

Tabelle 4 zeigt die entsprechenden mechanischen Eigenschaften der RTV-IK-Vulkanisate. Die mechanischen Eigenschaften der erfindungsgemäßen Formulierungen sind bei gleicher Viskosität erheblich besser als der Stand der Technik.

**Tabelle 4:** Mechanische Eigenschaften der RTV-1K-Formulierungen (Vulkanisate)

| Test Nr. | Füllgrad [Gew.-%] | Zugfestigkeit [$N/mm^2$] | Bruchdehnung [%] | Weiter reißwiderstand [N/mm] | ShoreHärte A |
|---|---|---|---|---|---|
| 513 | Kieselsäure gemäß Tabelle 1 [8 %] | 0.7 | 682 | 1.6 | 9 |
| 530 | Kieselsäure gemäß Tabelle 1 [15 %] | 2.2 | 1299 | 3.5 | 13 |
| 547 | Kieselsäure gemäß Tabelle 1 [17 %] | 2.6 | 1217 | 3.5 | 16 |

(fortgesetzt)

| Test Nr. | Füllgrad [Gew.-%] | Zugfestigkeit [N/mm2] | Bruchdehnung [%] | Weiter reißwiderstand [N/mm] | ShoreHärte A |
|---|---|---|---|---|---|
| 518 | Kieselsäure gemäß Tabelle 1 [20 %] | 4.1 | 1342 | 5.4 | 21 |
| 474 | AEROSIL 150 [8 %] | 1.4 | 515 | 2.5 | 20 |
| 484 | AEROSIL R 974 [8 %] | 1.3 | 445 | 2.1 | 22 |
| 388 | AEROSIL R 972 [8 %] | 1.1 | 557 | 3.0 | 16 |

Die Tabellen 5 und 6 zeigen, dass die erfindungsgemäßen Formulierungen auch nach 30 Tagen noch lagerfähig sind.

**Tabelle 5** Viskositätsänderungen mit der Zeit bei Raumtemperatur

| Test Nr. | Füllgrad [%] | Viskosität [Pa•s] direkt nach Einarbeitung | nach 7 Tagen | nach 30 Tagen | Fließgrenze [Pa] direkt nach Einarbeitung | nach 7 Tagen | nach 30 Tagen |
|---|---|---|---|---|---|---|---|
| 513 | 8 | 28 | 28 | 28 | 0 | 0 | 0 |
| 530 | 15 | 59 | 66 | 64 | 1.9 | 3.0 | 3.2 |
| 547 | 17 | 102 | 104 | - | 10 | 10 | - |
| 518 | 20 | 310 | *n.a. | - | 75 | - | - |
| * Silikonformulierung konnte wegen zu hoher Viskosität nicht mehr aus der Tube entfernt werden. | | | | | | | |

**Tabelle 6** Viskositätsänderungen mit der Zeit bei 60 °C

| Test Nr. | Füllgrad [%] | Viskosität [Pa•s] direkt nach Einarbeitung | nach 7 Tagen | nach 30 Tagen | Fließgrenze [Pa] direkt nach Einarbeitung | nach 7 Tagen | nach 30 Tagen |
|---|---|---|---|---|---|---|---|
| 513 | 8 | 28 | 17 | 15 | 0 | 0 | 0 |
| 530 | 15 | 59 | 49 | 48 | 1.9 | 2.3 | 2.5 |

Mit einer Temperaturerhöhung von 60 °C wurde eine Lagerzeit von ca. 6 Monaten simuliert. Auch hier wurden keine signifikanten Veränderungen der rheologischen Eigenschaften festgestellt.

**Beispiel 8**

Es wurde die Fließgrenze von RTV-1K-Silikonkautschukformulierungen, die hydrophobe Fällungskieselsäure und optional pyrogene Kieselsäure enthalten, untersucht. Zur Ermittlung des Fließverhaltens wurden die entsprechenden Mischungen hergestellt und eine Menge von 0,7 g auf eine Glasplatte aufgetragen. Die Glasplatte wurde anschließend senkrecht gestellt und das Fließverhalten 24 Stunden später durch Ausmessen der Fließlänge bestimmt. Es zeigte sich, dass das Fließverhalten einer Mischung, die eine hydrophobe Fällungskieselsäure enthält, durch Zugabe von geringen Mengen an pyrogenen Kieselsäuren erheblich verbessert werden kann. (Fig. 3). Tabelle 7 zeigt das thixotrope Verhalten bzw. die Standfestigkeit entsprechender Mischungen.

Es kann daher festgestellt werden, dass durch Zugabe von pyrogenen Kieselsäuren das Fließverhalten der

erfindungsgemäßen Silikonkautschukformulierungen in weiten Grenzen unabhängig vom Füllgrad an hydrophober Kieselsäure eingestellt werden kann.

**Tabelle 7** Thixotropes Verhalten von Abmischungen aus hydrophober Fällungskieselsäure und hydrophiler pyrogener Kieselsäure

| Versuch | Kieselsäuren Füllgrad [%] | Fließgrenze [Pa] | Viskosität [Pa*s] | Ergebnis (L2-L1) |
|---|---|---|---|---|
| 1 | Hydrophobe Kieselsäure gemäß Tabelle 1 [15 %] | 2 | 59 | fließfähig (22 mm) |
| 2 | Hydrophobe Kieselsäure gemäß Tabelle 1 [17 %] | 10 | 102 | fließfähig (10 mm) |
| 3 | Hydrophobe Kieselsäure gemäß Tabelle 1 [10 %] mit Aerosil 300 [1 %] | 1 | 61 | fließfähig (28 mm) |
| 4 | Hydrophobe Kieselsäure gemäß Tabelle 1 [10 %]) mit Aerosil 300 [2 %] | 21 | 93 | nicht fließfähig (0 mm) |
| 5 | Aerosil 150 [8 %] | 398 | 147 | nicht fließfähig (0 mm) |
| L1 : Länge des Materials vor dem Test<br>L2 : Länge des Materials nach dem Test | | | | |

## Patentansprüche

1. Raumtemperaturvernetzende Einkomponenten-Silikonkautschukformulierungen (RTV-1K), enthaltend 0,5 bis 60 Gew.-% hydrophobe Kieselsäuren mit den folgenden Eigenschaften:

   - Kohlenstoffgehalt > 3.1 %
   - Methanolbenetzbarkeit > 60 %
   - Remissionswert > 94 %
   - Verhältnis von BET/CTAB > 1 und < 3
   - DHP-Aufnahme < 230 g/100 g
   - HET-Oberfläche 50 -110 $m^2/g$
   - CTAB-Oberfäche > 30 $m^2/g$
   - Wasserdampfaufnahme bei 30 °C und 30 RF < 1.3
   - Wasserdampfaufnahme bei 30 °C und 70 RF < 1.7

   und 40 - 99,5 Gew.-% eines Organopolysiloxans der Formel

   $$Z_n\ Si\ R_{3-n}\ -O-[Si\ R_2\ O]_x\ -Si\ R_{3-n}\ -Z'_n$$

   mit R = Alkyl-, Acetoxy-, Oxim-, Alkoxy-, Amido-, Aryl-, Alkenylreste, mit 1 bis 50 Kohlenstoffatomen, unsubstituiert oder mit O, S, F, Cl, Br, I substituiert, jeweils gleich oder verschieden und/oder Polystyrol-, Polyvinylacetat-, Polyacrylat-, Polymethacrylat- und Polyacrylnitrilreste mit 50 - 10.000 Repetiereinheiten.
   Z = OH, Cl, Br, Acetoxy-, Amino-, Amido-, Aminoxy-, Oxim-, Alkoxy-, Alkenyloxy-, Acryloxy- oder Phosphatresten, wobei die organischen Reste bis zu 20 Kohlenstoffatome tragen können, jeweils gleich oder verschieden.
   Z' = Oxim-, Alkoxy-, Amido-, Acetoxyreste
   n = 1-3
   X = 100-15.000.

**2.** Raumtemperaturvernetzende Einkomgonenten-Silikonkautschukformulierungen (RTV-1K) nach Anspruch 1, **dadurch gekennzeichnet,**
**dass** die Silikonkautschukformulierungen zusätzlich 0,5 bis 20 Gew.-% eines Vernetzers mit der Formel

$$R'_{4-t}\, Si\, Z'_4$$

mit R' = Alkyl-, Alkoxy-, Acetoxy-, Amido-, Oxim-, Aryl-, Alkenylreste, mit 1 bis 50 Kohlenstoffatomen, unsubstituiert oder mit O, S, F, Cl, Br, I substituiert, jeweils gleich oder verschieden und/oder Polystyrol-, Polyvinylacetat-, Polyacrylat-, Polymethacrylat- und Polyacrylnitrilreste mit 5 - 5.000 Repetiereinheiten.
Z' = OH, Cl, Br, Acetoxy-, Oxim-, Amino-, Amido-, Aminoxy-, Alkenyloxy-, Aryloxy- oder Phosphatresten, wobei die organischen Reste bis zu 20 Kohlenstoffatome tragen können, jeweils gleich oder verschieden.
t = 3 oder 4

enthalten.

**3.** Raumtemperaturvernetzende Einkomponenten-Silikonkautschukformulierungen (RTV-1K) nach einem der Ansprüche 1 oder 2,
**dadurch gekennzeichnet,**
**dass** die hydrophoben Kieselsäuren aus Fällungskieselsäuren hergestellt wurden und die Silikonkautschukformulierungen zusätzlich 0,01 - 12 Gew.-% pyrogene Kieselsäure enthalten.

**4.** Raumtemperaturvernetzende Einkomponenten-Silikonkautschukformulierungen (RTV-1K) nach einem der Ansprüche 1 bis 3,
**dadurch gekennzeichnet,**
**dass** die Silikonkautschukformulierungen zusätzlich 0,01 bis 99,5 Gew.-% eines unfunktionalisierten Polysiloxans enthalten.

**5.** Raumtemperaturvernetzende Einkomponenten-Silikonkautschukformulierungen (RTV-1K) nach einem der Ansprüche 1 bis 4,
**dadurch gekennzeichnet,**
**dass** die Silikonkautschukformulierungen zusätzlich 0,1- 20 Gew.-% eines oder mehrerer wasserbindender Mittel enthalten.

**6.** Raumtemperaturvemetzende Einkomponenten-Silikonkautschukformulierungen (RTV-1K) nach einem der Ansprüche 1 bis 5,
**dadurch gekennzeichnet,**
**dass** die Organopolysiloxane eine Viskosität von maximal 500.000 cP aufweisen.

**7.** Raumtemperaturvemetzende Einkomponenten-Silikonkautschukformulierungen (RTV-1K) nach einem der Ansprüche 1 bis 6,
**gekennzeichnet durch**,
dass die hydrophobe Kieselsäure eine modifizierte Searszahl < 1,6 aufweist.

**8.** Raumtemperaturvemetzende Einkomponenten-Silikonkautschukformulierungen (RTV-1K) nach einem der Ansprüche 1 bis 7,
**dadurch gekennzeichnet,**
**dass** die hydrophobe Kieselsäure einen pH-Wert von 5,0 bis 9,0 aufweist.

**9.** Raumtemperaturvernetzende Einkomponenten-Silikonkautschukformulierungen (RTV-1K) nach einem der Ansprüche 1 bis 8,
**dadurch gekennzeichnet,**
**dass** die hydrophobe Kieselsäure einen Wassergehalt von < 2 % aufweist.

**10.** Raumtemperaturvemetzende Einkomponenten-Silikonkautschukformulierungen (RTV-1K) nach einem der Ansprüche 1 bis 9,
**dadurch gekennzeichnet,**
**dass** die hydrophobe Kieselsäure eine Leitfähigkeit von < 500 µS aufweist.

**11.** Raumtemperaturvemetzende Einkomponenten-Silikonkautschukformulierungen (RTV-1K) nach einem der Ansprüche 1 bis 10,
**dadurch gekennzeichnet,**
**dass** die hydrophobe Kieselsäure einen Glühverlust von > 3 % aufweist.

**12.** Raumtemperaturvernetzende Einkomponenten-Silikonkautschukformulierungen (RTV-1K) nach einem der Ansprüche 1 bis 11,
**dadurch gekennzeichnet,**
**dass** die hydrophobe Kieselsäure eine hydrophobe Fällungskieselsäure ist.

**13.** Raumtemperaturvernetzende Einkomponenten-Silikonkautschukformulierungen (RTV-1K) nach einem der Ansprüche 1 bis 4,
**dadurch gekennzeichnet,**
**dass** die Silikonkautschukformulierungen zusätzlich 0,01 bis 6 Gew.-% organische oder anorganische Verbindungen der Metalle Pt, Sn, Ti und/oder Zn als Katalysator und/oder 0,01 bis 6 Gew.-% Inhibitoren und/oder 0,01 bis 6 Gew.-% Haftvermittler und/oder 0,01 - 6 Gew.-% Fungizide und/oder Bakterizide enthalten.

**14.** Verwendung der raumternperatucvemetzenden Einkomponenten-Silikonkautschukformulierung (RTV-1K) nach einem der Ansprüche 1 bis 12 als RTV-1K-Silikondichtungsmassen.

**15.** Verwendung der raumtemperaturvemetzenden Einkomponenten-Silikonkautschukformulierungen (RTV-1K) nach Anspruch 14,
**dadurch gekennzeichnet,**
**dass** die Silikondichtungsmassen selbstnivellierende RTV-1K-Silikondichtungsmassen sind.

**16.** Verwendung der raumtemperaturvemetzenden Einkomponenten-Silikonkautschukformulierungen (RTV-1K) nach einem der Ansprüche 1 bis 12 als Fugenmassen, Fensterdichtmassen, Dichtungen in Kraftfahrzeugen, hitzebeständigen Dichtungen, ölausschwitzende Dichtungen und chemikalienbeständige Dichtungen, wasserdampfbeständigen Dichtungen.

## Claims

**1.** A room temperature crosslinking, one component (RTV 1K) silicone rubber formulation containing from 0.5 to 60% by weight of hydrophobic silica having the following properties:

- carbon content >3.1%
- methanol wettability >60%
- reflectance >94%
- BET/CTAB ratio >1 and <3
- DBP absorption <230 g/100 g
- BET surface area 50-110 $m^2/g$
- CTAB surface area >30 $m^2/g$
- water vapour absorption at 30°C and 30 AH <1.3
- water vapour absorption at 30°C and 70 AH <1.7

and 40-99.5% by weight of an organopolysiloxane of the formula

$$Z_nSiR_{3-n}\text{-O- }[SiR_2O]_x\text{-}SiR_{3-n}\text{-}Z'_n$$

where R = alkyl, acetoxy, oxime, alkoxy, amido, aryl, alkenyl radicals, having from 1 to 50 carbon atoms, unsubstituted or substituted by O, S, F, Cl, Br, I, in each case identical or different, and/or polystyrene, polyvinyl acetate, polyacrylate, polymethacrylate, and polyacrylonitrile radicals having 50-10 000 repeating units.
Z = OH, Cl, Br, acetoxy, amino, amido, amineoxy, oxime, alkoxy, alkenyloxy, acryloxy or phosphate radicals, it being possible for the organic radicals to carry up to 20 carbon atoms, in each case identical or different.
Z' = oxime, alkoxy, amido, acetoxy radicals,
n = 1-3
x = 100-15 000.

2. An RTV 1K silicone rubber formulation according to claim 1, **characterized in that** the silicone rubber formulation further contains from 0.5 to 20% by weight of a crosslinker having the formula

$$R'_{4-t}SiZ'_4$$

where R' = alkyl, alkoxy, acetoxy, amido, oxime, aryl, alkenyl radicals, having from 1 to 50 carbon atoms, unsubstituted or substituted by O, S, F, Cl, Br, I, in each case identical or different, and/or polystyrene, polyvinyl acetate, polyacrylate, polymethacrylate, and polyacrylonitrile radicals having 5-5 000 repeating units.
Z' = OH, Cl, Br, acetoxy, oxime, amino, amido, amineoxy, alkenyloxy, aryloxy or phosphate radicals, it being possible for the organic radicals to carry up to 20 carbon atoms, in each case identical or different.
t = 3 or 4.

3. An RTV 1K silicone rubber formulation according to either one of claims 1 and 2, **characterized in that** the hydrophobic silica has been prepared from precipitated silica and the formulation further contains 0.01-12% by weight of pyrogenic silica.

4. An RTV 1K silicone rubber formulation according to any one of claims 1 to 3, **characterized in that** the silicone rubber formulation further contains from 0.01 to 99.5% by weight of an unfunctionalized polysiloxane.

5. An RTV 1K silicone rubber formulation according to any one of claims 1 to 4, **characterized in that** the silicone rubber formulation further contains 0.1-20% by weight of one or more water-binding agents.

6. An RTV 1K silicone rubber formulation according to any one of claims 1 to 5, **characterized in that** the organopolysiloxane has a viscosity of not more than 500 000 cP.

7. An RTV 1K silicone rubber formulation according to any one of claims 1 to 6, **characterized in that** the hydrophobic silica has a modified Sears number <1.6.

8. An RTV 1K silicone rubber formulation according to any one of claims 1 to 7, **characterized in that** the hydrophobic silica has a pH of from 5.0 to 9.0.

9. An RTV 1K silicone rubber formulation according to any one of claims 1 to 8, **characterized in that** the hydrophobic silica has a water content of <2%.

10. An RTV 1K silicone rubber formulation according to any one of claims 1 to 9, **characterized in that** the hydrophobic silica has a conductivity of <500 μS.

11. An RTV 1K silicone rubber formulation according to any one of claims 1 to 10, **characterized in that** the hydrophobic silica has a loss on ignition of >3%.

12. An RTV 1K silicone rubber formulation according to any one of claims 1 to 11, **characterized in that** the hydrophobic silica is a hydrophobic precipitated silica.

13. An RTV 1K silicone rubber formulation according to any one of claims 1 to 4, **characterized in that** the silicone rubber formulation further contains from 0.01 to 6% by weight of organic or inorganic compounds of the metals Pt, Sn, Ti and/or Zn as catalyst and/or from 0.01 to 6% by weight of inhibitor and/or from 0.01 to 6% by weight of adhesion promoter and/or 0.01-6% by weight of fungicide and/or bactericide.

14. The use of an RTV 1K silicone rubber formulation according to any one of claims 1 to 12 as an RTV 1K silicone sealing compound.

15. The use of an RTV 1K silicone rubber formulation according to claim 14 , **characterized in that** the silicone sealing compound is a self-levelling RTV 1K silicone sealing compound.

16. The use of an RTV 1K silicone rubber formulation according to any one of claims 1 to 12 as a jointing compound, window sealing compound, seal in motor vehicles, heat-resistant seal, oil-exuding seal and/or chemical-resistant seal or water-vapourresistant seal.

## Revendications

**1.** Formulations de caoutchouc de silicone mono - composant réticulant à la température ambiante (1C-RTA) contenant 0,5 à 60 % en poids d'acides siliciques hydrophobes possédant les propriétés suivantes :

- teneur en carbone : > 3,1 %
- mouillabilité par le méthanol > 60 %
- indice de rémission > 94 %
- rapport BET/CTAB > 1 et < 3
- absorption de DBP < 230 g/100 g
- surface BET 50-110 $m^2/g$
- surface CTAB > 30 $m^2/g$
- absorption de vapeur d'eau à 30 °C et 30 % d'humidité relative < 1,3
- absorption de vapeur d'eau à 30 °C et 70 % d'humidité relative < 1,7

et 40 - 99,5 % en poids d'un organopolysiloxane répondant à la formule:

$$Z_nSi\ R_{3-n} - O - [Si\ R_2\ O]_x - Si\ R_{3-n} - Z'_n$$

avec R = radicaux alkyle, acétoxy, oxime, alcoxy, amido, aryle, alcényle, comportant 1 à 50 atomes de carbone, non substitués ou substitués par O, S, F, Cl, Br, I, à chaque fois identiques ou différents, et/ou radicaux polystyrène, polyacétate de vinyle, polyacrylate, polyméthacrylate et polyacrylonitrile comportant 50 - 10 000 unités répétitives ;
Z = OH, Cl, Br, radicaux acétoxy, amino, amido, aminoxy, oxime, alcoxy, alcényloxy, acryloxy, ou phosphate, les radicaux organiques pouvant porter jusqu'à 20 atomes de carbone, à chaque fois identiques ou différents ;
Z' = radicaux oxime, alcoxy, amino, acétoxy ;
n= 1-3;
X= 100-15000.

**2.** Formulations de caoutchouc de silicone mono- composant réticulant à la température ambiante (1C-RTA) selon la revendication 1,
**caractérisées en ce que**
ces formulations de caoutchouc de silicone contiennent en outre 0,5 à 20 % en poids d'un agent de réticulation répondant à la formule

$$R'_{4-t}\ Si\ Z'_4$$

avec R' = radicaux alkyle, alcoxy, acétoxy, amido, oxime, aryle, alcényle, comportant 1 à 50 atomes de carbone, non substitués ou substitués par O, S, F, Cl, Br, I, à chaque fois identiques ou différent, et/ou radicaux polystyrène, polyacétate de vinyle, polyacrylate, polyméthacrylate et polyacrylonitrile comportant 5 - 5 000 unités répétitives ;
Z' = OH, Cl, Br, radicaux acétoxy, oxime, amino, amido, aminoxy, alcényloxy, aryloxy ou phosphate, les radicaux organiques pouvant porter jusqu'à 20 atomes de carbone, à chaque fois identiques ou différents ; et
t= 3 ou 4

**3.** Formulations de caoutchouc de silicone mono-composant réticulant à la température ambiante (1C-RTA) selon une des revendications 1 ou 2,
**caractérisées en ce que**
les acides siliciques hydrophobes ont été produits à partir d'acides siliciques précipités et les formulations de caoutchouc de silicone contiennent en outre 0,01- 12 % en poids d'acide silicique pyrogène.

**4.** Formulations de caoutchouc de silicone mono - composant réticulant à la température ambiante (1C-RTA) selon l'une des revendications 1 à 3,
**caractérisées en ce que**
ces formulations de caoutchouc de silicone contiennent en outre 0,01 - 99,5 % en poids d'un polysiloxane non fonctionnalisé.

**5.** Formulations de caoutchouc de silicone mono composant réticulant à la température ambiante (1C-RTA) selon une des revendications 1 à 4,

**caractérisées en ce que**
ces formulations de caoutchouc de silicone contiennent en outre 0,1 - 20 % en poids d'un ou plusieurs agent(s) fixateurs d'eau.

**6.** Formulations de caoutchouc de silicone mono - composant réticulant à la température ambiante (1C-RTA) selon une des revendications 1 à 5,
**caractérisées en ce que**
les organopolysiloxanes présentent une viscosité maximale de 500 000 cP.

**7.** Formulations de caoutchouc de silicone mono-composant réticulant à la température ambiante (1C-RTA) selon une des revendications 1 à 6,
**caractérisées en ce que**
l'acide silicique hydrophobe possède un indice de Sears modifié < 1,6

**8.** Formulations de caoutchouc de silicone mono - composant réticulant à la température ambiante (1C-RTA) selon une des revendications 1 à 7,
**caractérisées en ce que**
l'acide silicique hydrophobe à un pH de 5,0 à 9,0.

**9.** Formulations de caoutchouc de silicone mono - composant réticulant à la température ambiante (1C-RTA) selon une des revendications 1 à 8,
**caractérisées en ce que**
l'acide silicique hydrophobe a une teneur en eau < 2 %.

**10.** Formulations de caoutchouc de silicone mono - composant réticulant à la température ambiante (1C-RTA) selon une des revendications là 9,
**caractérisées en ce que**
l'acide silicique hydrophobe présente une conductivité < 500 μS.

**11.** Formulations de caoutchouc de silicone mono - composant réticulant à la température ambiante (1C-RTA) selon une des revendications 1 à 10,
**caractérisées en ce que**
l'acide silicique hydrophobe possède une perte au rouge > 3 %.

**12.** Formulations de caoutchouc de silicone mono - composant réticulant à la température ambiante (1C-RTA) selon une des revendication 1 à 11,
**caractérisées en ce que**
l'acide silicique hydrophobe est un acide silicique précipité hydrophobe.

**13.** Formulations de caoutchouc de silicone mono - composant réticulant à la température ambiante (1C-RTA) selon une des revendication 1 à 4,
**caractérisées en ce que**
les formulations de caoutchouc de silicone contiennent en outre 0,01 à 6 % en poids de composés organiques ou inorganiques des métaux Pt, Sn, Ti et/ou Zn, comme catalyseurs, et/ou 0,01 à 6 % en poids d'inhibiteurs et/ou 0,01 à 6 % en poids de promoteurs d'adhérence et/ou 0,01 à 6 % en poids de fongicides et/ou bactéricides.

**14.** Utilisation des formulations de caoutchouc de silicone mono - composant réticulant à la température ambiante (1C-RTA) selon l'une des revendications 1 à 12, comme masses d'étanchéité en silicone 1C-RTA.

**15.** Utilisation des formulations de caoutchouc de silicone mono - composant réticulant à la température ambiante (1C-RTA) selon la revendication 14,
**caractérisée en ce que**
les masses d'étanchéité en silicone sont des masses d'étanchéité en silicone 1C-RTA auto-nivelantes.

**16.** Utilisation des formulations de caoutchouc de silicone mono-composant réticulant à la température ambiante (1C-RTA) selon une des revendications 1 à 12, comme masses de jointoiement, mastics d'étanchéité de fenêtres, joints dans les véhicules automobiles, joints résistant à la chaleur, joints exsudant l'huile et joints résistant aux agents chimiques, joints résistant à la vapeur d'eau.

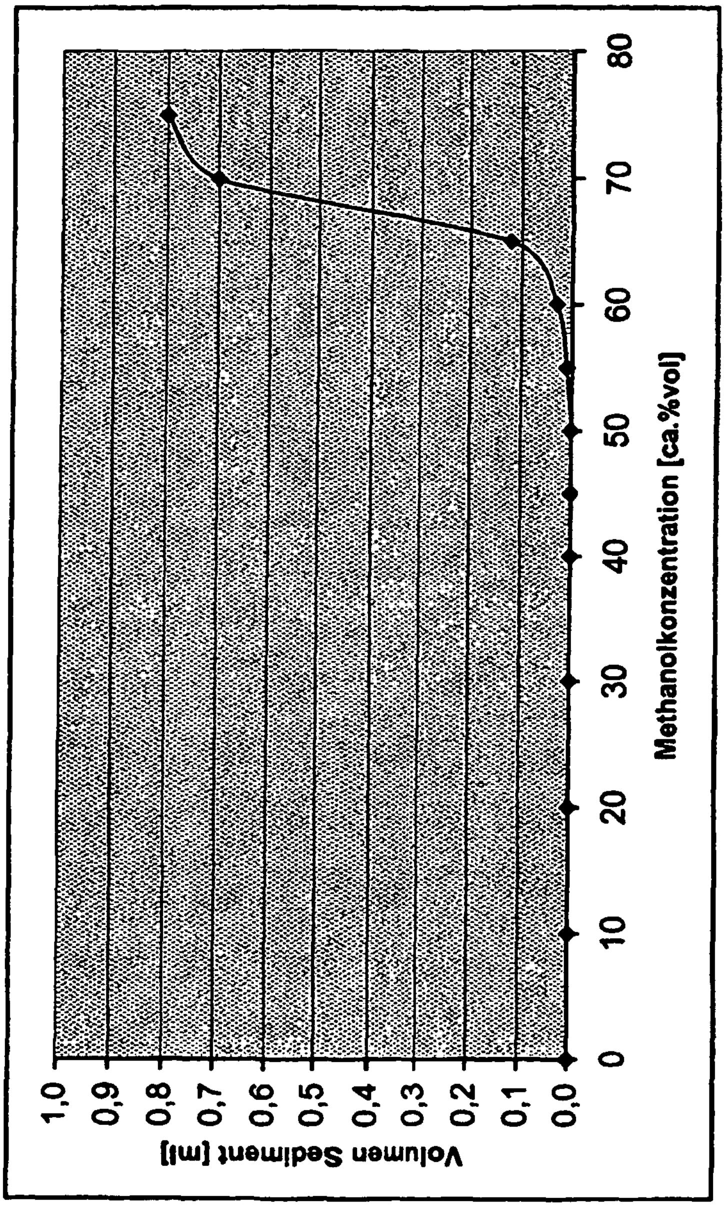
Volumen Sediment [ml]
1,0
0,9
0,8
0,7
0,6
0,5
0,4
0,3
0,2
0,1
0,0
0
10
20
30
40
50
60
70
80
Methanolkonzentration [ca.%vol]

Fig. 1

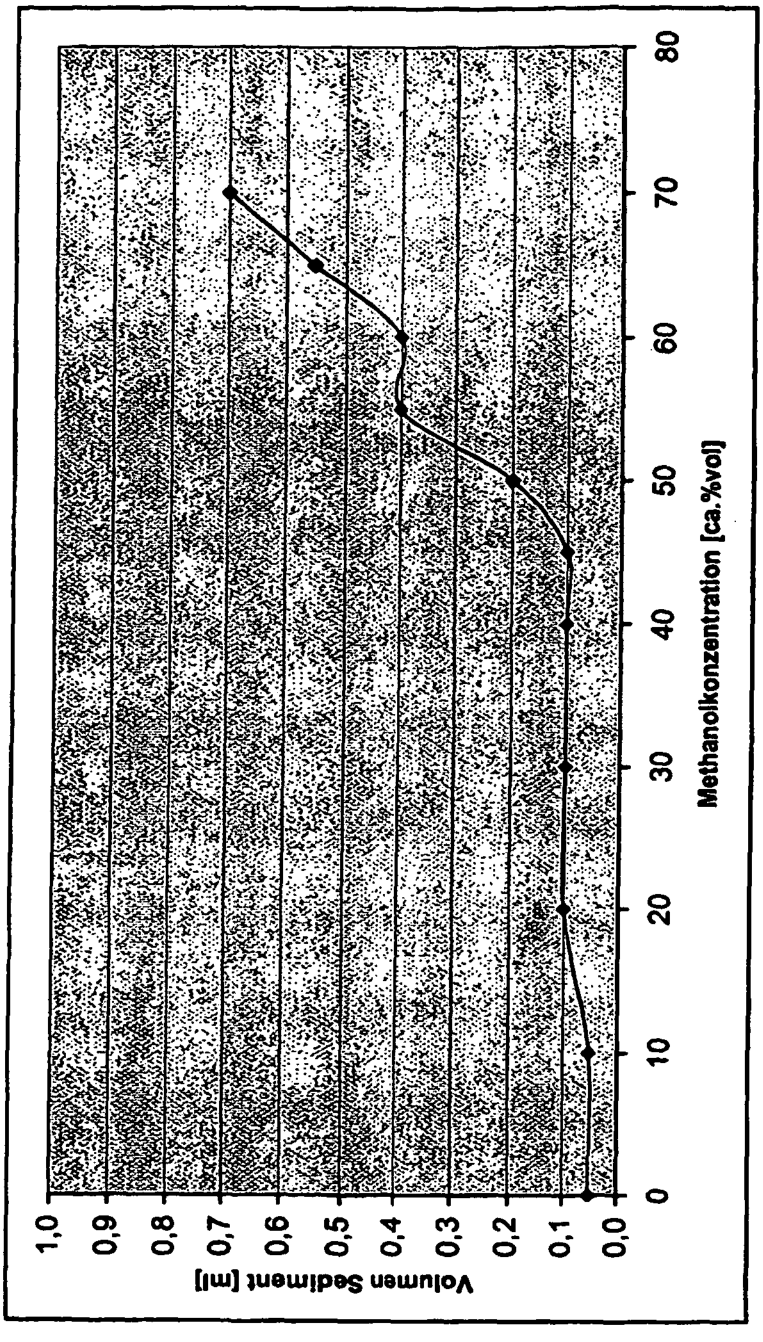
Volumen Sediment [ml]
1,0
0,9
0,8
0,7
0,6
0,5
0,4
0,3
0,2
0,1
0,0
0
10
20
30
40
50
60
70
80
Methanolkonzentration [ca.%vol]

Fig. 2

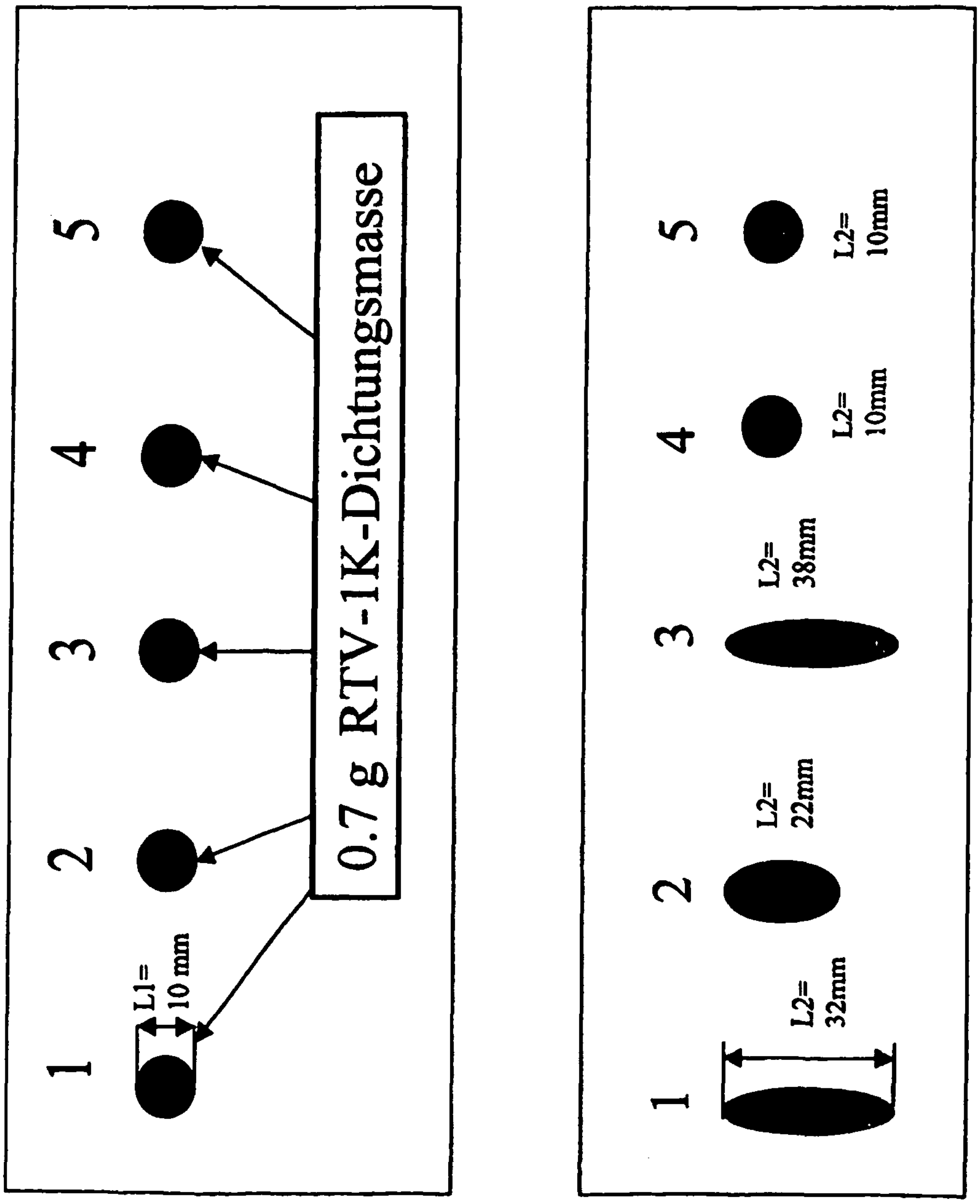
1
2
3
4
5
L1=
10 mm
0.7 g RTV-1K-Dichtungsmasse
1
2
3
4
5
L2=
32mm
L2=
22mm
L2=
38mm
L2=
10mm
L2=
10mm

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2729244
- DE 2628975